# EUROPÄISCHE PATENTANMELDUNG

(11) **EP 4 446 074 A1**
(43) Veröffentlichungstag der Anmeldung: **16.10.2024**
(21) Anmeldenummer: 24156109.1
(22) Anmeldetag: 04.04.2023
(51) Int. Cl.: B26D 1/04, B26D 1/08, B26D 1/45, B26D 1/60, B26D 5/00, B26D 5/08, B26D 7/06, B26D 7/26, A21C 5/00

(54) **VORRICHTUNG ZUM SCHNEIDEN ODER STANZEN VON TEIG**

(62) Teilanmeldung aus: 23166632.2
(71) Anmelder: Rondo Burgdorf AG, 3400 Burgdorf (CH)
(72) Erfinder: BLASER, Fabian, 3400 Burgdorf (CH); HIRSCHI, Sven, 3400 Burgdorf (CH); BESSON, Marc, 3400 Burgdorf (CH)
(74) Vertreter: Keller Schneider Patent- und Markenanwälte AG

(57) **Zusammenfassung**

Die vorliegende Anmeldung betrifft eine Vorrichtung zum Schneiden von Teig, insbesondere eines Teigbandes. Die Vorrichtung umfasst eine Fördervorrichtung, auf welcher ein Teig aufliegen kann und mit welcher dieser in einer Förderrichtung gefördert werden kann, sowie eine Schneidvorrichtung mit einem Messerbalken, an welchem mindestens eine Messerklinge insbesondere lösbar befestigt ist. Die Vorrichtung weist ferner eine Verschiebevorrichtung auf, mit welcher der Messerbalken orthogonal relativ zur Fördervorrichtung in einer ersten Raumrichtung, insbesondere der vertikalen Raumrichtung, linear verschiebbar ist, um den auf der Fördervorrichtung liegenden Teig an definierten Stellen zu schneiden, wobei die Verschiebevorrichtung zwei seitlich und einander gegenüber stehende Säulen umfasst, welche sich in der ersten Raumrichtung relativ zur Fördervorrichtung erstrecken und von dieser abstehen, und an welchen der Messerbalken linear in der ersten Raumrichtung verschiebbar gelagert ist. Die Vorrichtung weist eine Gegendruckplatte auf, auf welcher die Fördervorrichtung liegt, wobei die Gegendruckplatte mittels mindestens eines Federelements federnd auf einem Gestell der Vorrichtung angeordnet ist.

## Beschreibung

### Technisches Gebiet

Die Erfindung betrifft eine Vorrichtung zum Schneiden oder Stanzen von Teig, insbesondere eines Teigbandes, mit einer Fördervorrichtung, auf welcher ein Teig aufliegen kann.

### Stand der Technik

In Grossbäcl<ereien sowie bei der industriellen Backwarenherstellung werden Vorrichtungen eingesetzt, mit denen sich einzelne Teige oder Teigbänder in Teigstücke mit einer definierten Breite schneiden oder mit denen sich Teige oder Teigbänder stanzen lassen. Diese Teigstücke können dann in weiteren Verarbeitungsschritten zu Teiglingen geformt werden, aus denen Backwaren hergestellt werden. Zum Teilen oder Stanzen von Teigen bzw. Teigbändern existieren grundsätzlich zwei mögliche Varianten von Vorrichtungen: Bei einer ersten Variante wird der Teig bzw. das Teigband mittels einer um eine Achse drehende Walze, welche über eine oder mehrere von der Walze abstehende Klingen aufweist, in einem kontinuierlichen, rotierenden Prozess geschnitten oder gestanzt. In einer zweiten Variante wird der Teig bzw. das Teigband mittels eines runter- und hochfahrenden Langmessers, der sogenannte Guillotine, in einem kontinuierlichen oder diskontinuierlichen Prozess geschnitten oder gestanzt.

Sofern mit einer Guillotine der Teig bzw. das Teigband in einem kontinuierlichen Prozess geschnitten oder gestanzt werden soll, das heisst ohne dass eine Fördervorrichtung, auf welcher der Teig bzw. das Teigband aufliegt, bei jedem Schnitt oder bei jedem Stanzschritt angehalten werden muss, ist vorgesehen, dass sich die Guillotine beim Runterfahren in Förderrichtung des Teigs bzw. Teigbandes mit derselben Geschwindigkeit wie letzterer bewegt, wobei nach erfolgten Schnitt oder Stanzschritt und während des Hochfahrens der Guillotine sich diese entgegen der Förderrichtung wieder zurückbewegt. Diese Kopplung von zwei Bewegungen entlang zweier Raumrichtungen kann auf verschiedene Arten gelöst werden.

Im Stand der Technik sind denn auch unterschiedliche Vorrichtungen bekannt, mit denen Teig oder ein Teigband mittels einer Guillotine geschnitten oder gestanzt werden kann. Die CN 112077895 offenbart beispielsweise eine Vorrichtung zum Schneiden von Bandnudeln, welche über einen Schneidetisch mit einem Schlitz verfügt, unterhalb welchem ein Sammelbehälter angeordnet ist. Seitlich des Schlitzes sind Stützen angebracht, welche über Führungsnuten verfügen, in denen ein Schneidmesser vertikal geführt ist. Beidseitig des Schlitzes sind Förderbänder angeordnet, auf denen Teigbänder gefördert werden können. Das Schneidmesser ist über Federn in eine obere Position vorgespannt und kann mittels zweier Zylinder, von denen jeweils eines auf jeder der Stützen angeordnet ist, nach unten bewegt werden, um die Teigbänder zu Bandnudeln mit einer definierten Länge zu schneiden.

Die EP 1 832 170 A2 beschreibt eine Vorrichtung zum Schneiden und Separieren von Teiglingen in beliebige geometrische Formen aus einem kontinuierlich oder getaktet geführten Teigband, umfassend ein Transportband und einen Werkzeugbalken mit einer Vielzahl von messerartigen Schneidwerkzeugen, welcher mittels Hubantrieb zur Ausführung von Schneidbewegungen auf das auf dem Transportband befindliche Teigband zuführbar und wieder von diesem entfernbar ist. Der Werkzeugbalken ist über eine Längsführung mit einem Linearantrieb in Durchlaufrichtung des Transportbandes verfahrbar. Mit Hilfe eines Drehantriebs wird über ein Getriebe und einem Exzenterelement ein Schneidhub erzeugt, der mit Hilfe einer Koppelstange auf den Werkzeugbalken übertragen wird.

Die EP 2 633 760 B1 beschreibt eine Vorrichtung zum Schneiden von Teig. Die Vorrichtung umfasst ein Förderband, einen Schlitten, der in Richtung des Förderbandes bewegbar ist, sowie ein Schneidmesser, welches mit dem Schlitten verbunden ist und in vertikaler Richtung bewegbar ist. Die Vorrichtung umfasst ferner einen Antriebsarm, der über einen in vertikaler Richtung verschiebbar gelagerten Drehpunkt in zwei Teilarme unterteilt wird, wobei ein erster Teilarm mit dem Schlitten und ein zweiter Teilarm mit einem ersten Antrieb verbunden ist, um diesen in eine hin- und her Bewegung zu versetzen. Die Vorrichtung weist ferner einen zweiten Antrieb auf, der eine Hubbewegung für das Schneidmesser erzeugt.

Der erste und zweite Antrieb sind miteinander synchronisiert, so dass bei einer Vorwärtsbewegung des Schlittens das Schneidmesser nach unten bewegt wird, um den Teig zu schneiden und bei einer Rückwärtsbewegung des Schlittens das Schneidmesser nach oben bewegt wird. Die horizontale Bewegung des Schlittens wird durch die Länge des ersten Teilarmes beschränkt, so dass durch eine Verschiebung des Drehpunktes die vom Schlitten in horizontaler Richtung zurückgelegte Distanz eingestellt werden kann. In einer Ausführungsform wird ein einzelner Antrieb verwendet, wobei die vertikale Hubbewegung des Schneidmessers durch ein Exzenterelement erzeugt wird, auf welchem auch der zweite Teilarm des Schlittenantriebs befestigt ist, die Vorrichtung verfügt hierbei über einen zentralen Motor, der über eine Welle beidseits des Förderbandes angeordnete Exzenterelemente antreibt.

Die EP 3 087 838 B1 offenbart eine Vorrichtung zum Schneiden von Teig. Die Vorrichtung umfasst ein Förderband zum Fördern von Teig in einer Förderrichtung, einen Schlitten, der oberhalb des Förderbandes und entlang von diesem bewegbar ist, sowie einem Schneidmesser, welches relativ zum Schlitten in vertikaler Richtung bewegbar ist. Die Vorrichtung umfasst ferner einen ersten Antrieb, mit welchem der Schlitten entlang des Förderbandes in zwei Richtungen verfahrbar ist, sowie einem zweiten Antrieb, um das Schneidmesser in vertikaler Richtung zu bewegen. Der zweite Antrieb ist ausserhalb des Schlittens angeordnet und über ein Getriebe mit dem Schneidmesser verbunden. Der zweite Antrieb kann als Drehantrieb ausgestaltet sein, der über eine Stange mit dem Schneidmesser verbunden ist, um dieses in eine vertikale Bewegungzu versetzen. Unterhalb des Förderbandes kann eine Gegendruckplatte angeordnet sein, welche einen Block aus weichem Material aufweist, um Schäden des Förderbandes durch das Schneidmesser zu verhindern, wobei die Gegendruckplatte mit dem Schlitten mitbewegt wird. Wenn der Schlitten bewegt wird, vergrössert sich die Distanz zwischen dem zweiten Antrieb und dem Schneidmesser, womit die Stange zu kurz wird, um eine volle Rotation des zweiten Antriebs zu erlauben. Daher verfügt der zweite Antrieb über eine Steuerung, die die Drehung des zweiten Antriebs in Abhängigkeit der Position des Schlittens einschränkt.

### Darstellung der Erfindung

Aufgabe der Erfindung ist es, eine Vorrichtung zum Schneiden oder Stanzen von Teig, insbesondere eines Teigbandes zu schaffen, bei welcher eine Beschädigung einer Messerklinge, einer Fördervorrichtung und/oder einer weiteren Komponente der Vorrichtung durch die Bewegung eines Messerbalkens verhindert wird.

Die Lösung der Aufgabe ist durch die Merkmale des Anspruchs 1 definiert. Gemäss der Erfindung umfasst eine Vorrichtung zum Schneiden oder Stanzen von Teig, insbesondere eines Teigbandes eine Fördervorrichtung, auf welcher ein Teig aufliegen kann und mit welcher dieser in einer Förderrichtung gefördert wird, sowie eine Schneidvorrichtung mit einem Messerbalken, an welchem mindestens eine Messerklinge insbesondere lösbar befestigt ist. Die Vorrichtung weist ferner eine Verschiebevorrichtung auf, mit welcher der Messerbalken orthogonal relativ zur Fördervorrichtung in einer ersten Raumrichtung, insbesondere der vertikalen Raumrichtung, linear verschiebbar ist, um den auf der Fördervorrichtung liegenden Teig an definierten Stellen zu schneiden, wobei die Verschiebevorrichtung zwei seitlich und einander gegenüber stehende Säulen umfasst, welche sich in der ersten Raumrichtung relativ zur Fördervorrichtung erstrecken und von dieser abstehen, und an welchen der Messerbalken linear in der ersten Raumrichtung verschiebbar gelagert ist. Die Fördervorrichtung liegt im Bereich der Verschiebevorrichtung auf einer Gegendruckplatte auf, die auf der dem Messerbalken gegenüberliegenden Seite der Fördervorrichtung angeordnet ist, wobei die Gegendruckplatte relativ zu einem Gestell der Vorrichtung entgegen der Federkraft mindestens eines Federelements in der ersten Raumrichtung vom Messerbalken weg beweglich gelagert ist.

Durch die Gegendruckplatte wird verhindert, dass sich die Fördervorrichtung durch das Auftreffen der mindestens einen Messerklinge auf die Fördervorrichtung beziehungsweise auf einem darauf liegenden Teig im Bereich der Schneidvorrichtung durchgebogen wird. Das heisst, die Gegendruckplatte wirkt den durch die mindestens eine Messerklinge auf die Fördervorrichtung wirkenden Kräfte entgegen. Dies ist insbesondere vorteilhaft wenn die Fördervorrichtung als Förderband ausgestaltet ist.

Sofern die Fördervorrichtung als Förderband ausgestaltet ist, wird dieses vorzugsweise über mindestens zwei Walzen aufgespannt. Durch diese mindestens zwei Walzen wird das Förderband jeweils am Ende der Fördervorrichtung im Wesentlichen um 180° umgelenkt. Das Förderband weist daher einen oberen Teil auf, der zum Messerbalken hin gerichtet ist, sowie einen unteren Teil. Die Förderrichtung bezieht sich in diesem Fall auf die Bewegungsrichtung des oberen Teils des Förderbandes, auf welchem auch der Teig beziehungsweise das Teigband aufliegt. In diesem Fall ist die Gegendruckplatte unterhalb dieses oberen Teils des Förderbandes angeordnet. Das heisst, die Gegendruckplatte liegt zwischen dem oberen Teil des Förderbandes und dem unteren Teil.

Durch das Vorsehen des mindestens einen Federelements kann die Gegendruckplatte bei Überschreitung einer vordefinierten Maximalkraft, welche durch die Federkraft des mindestens einen Federelements vorgegeben ist, in Richtung des Gestells der Vorrichtung bewegt werden. Das heisst, dass mittels der Gegendruckplatte eine übermässige Kraftbeaufschlagung auf die mindestens eine Messerklinge und/oder auf die Fördervorrichtung durch eine Bewegung der Gegendruckplatte in Richtung des Gestells abgefangen werden kann. Dies verhindert eine Beschädigung der mindestens einen Messerklinge, der Fördervorrichtung und/oder einer weiteren Komponente der Schneidvorrichtung. Die auf die Messerklinge beziehungsweise auf die Fördervorrichtung auftretenden Kräfte werden durch die Bewegung des Messerbalkens in die erste Raumrichtung beim Auftreffen der Messerklinge auf die Fördervorrichtung beziehungsweise einem darauf liegenden Teig erzeugt.

Die Vorrichtung ist grundsätzlich zum Schneiden von jeglichen Teigarten geeignet. Als Teig wird in sowohl eine Mischung aus wenigstens einem Mehl mit mindestens einer Flüssigkeit verstanden, wie auch teigartige Massen, wie zum Beispiel Marzipan oder Nussmassen. Insbesondere kann mit der erfindungsgemässen Vorrichtung Blätterteig, Bisl<uitteig, Filoteig, Hefeteig, Mürbeteig, etc. oder auch Nudelteig geschnitten oder gestanzt werden. Der Teig liegt vorzugsweise als kalibriertes Teigstück, insbesondere in rechteckiger Form oder als vorzugsweise I<alibrierters Teigband vor. Der Teig kann auch gerollt oder mehrschichtig vorliegen, wobei hierbei auch eine Füllung im gerollten oder mehrschichtigen Teig vorhanden sein kann, z.B. eine Nuss- oder Fleischfüllung.

Die Fördervorrichtung ist vorzugsweise als Bandförderer ausgestaltet. Alternativ kann die Fördervorrichtung jedoch auch anders ausgestaltet sein, beispielsweise als Gliedförderer.

Am Messerbalken kann mindestens eine Messerklinge angebracht sein, wobei die Messerklinge vorzugsweise lösbar am Messerbalken angebracht ist. Eine lösbare Anbringung der mindestens einen Messerklinge weist den Vorteil auf, dass die Messerklinge einfach vom Messerbalken gelöst werden kann, beispielsweise um diese zu reinigen oder gegen eine neue Messerklinge auszutauschen. Die lösbare Verbindung zwischen Messerbalken und der mindestens einen Messerklinge kann kraft- oder formschlüssig ausgestaltet sein. Bei einer kraftschlüssigen Verbindung kann die Messerklinge beispielsweise in mindestens eine Aufnahmeöffnung am Messerbalken geklemmt oder eingespannt werden. Eine formschlüssige Verbindung kann beispielsweise durch eine Schnappverbindung oder eine Schraubverbindung, insbesondere mittels Rändelschrauben realisiert werden. Als Messerklinge wird hierbei auch eine Stanzform verstanden.

Am Messerbalken können auch zwei oder mehr Messerklingen angebracht sein. Hierbei sind die Messeklingen insbesondere in Förderrichtung hintereinander am Messerbalken angeordnet.

Der Messerbalken ist vorzugsweise derart relativ zur Fördervorrichtung angeordnet, dass sich dieser in einem rechten Winkel zur Förderrichtung und somit zur Ausdehnungsrichtung der Fördervorrichtung erstreckt. Der Messerbalken weist eine Länge auf, die derart ist, dass sich der Messerbalken mindestens über die gesamte Breite der Fördervorrichtung rechtwinklig zu deren Förderrichtung spannt. Alternativ kann der Messerbalken jedoch auch derart relativ zur Fördervorrichtung angeordnet sein, dass sich dieser in einem definierten Winkel relativ zur Förderrichtung mindestens über die Breite der Fördervorrichtung spannt.

Mittels der Verschiebevorrichtung kann der Messerbalken in einer ersten Raumrichtung, welche orthogonal zur Fördervorrichtung, das heisst orthogonal relativ zur Erstreckungsrichtung der Fördervorrichtung steht, bewegt werden. Die erste Raumrichtung ist vorzugsweise die vertikale Richtung, das heisst diejenige Richtung, die im Wesentlichen parallel zur Wirkungsrichtung der Schwerkraft steht. In diesem Fall erstreckt sich die Fördervorrichtung in einer horizontalen Richtung. Durch eine Bewegung des Messerbalkens entlang der ersten Raumrichtung zur Fördervorrichtung hin kann mittels der mindestens einen Messerklinge ein auf der Fördervorrichtung liegender Teig mit der mindestens einen Messerklinge geschnitten werden. Anschliessend wird der Messerbalken entlang der ersten Raumrichtung wieder von der Fördervorrichtung weg bewegt und die Fördervorrichtung bewegt den darauf liegenden Teig um eine definierte Distanz in die Förderrichtung, bevor der Messerbalken für einen weiteren Schnitt in Richtung der Fördervorrichtung bewegt wird. Dadurch lässt sich der auf der Fördervorrichtung liegende Teig an definierten Stellen schneiden.

Die beiden Säulen der Verschiebevorrichtung stehen einander gegenüber und befinden sich jeweils auf einer anderen Seite der Fördervorrichtung. Je nachdem, ob der Messerbalken sich in einem rechten Winkel relativ zur Fördervorrichtung über diese spannt oder ein einem Winkel quer zu dieser, sind die beiden Säulen derart angeordnet, dass diese eine im rechten Winkel zur Fördervorrichtung stehende Ebene oder eine in einem Winkel anderen, definierten Winkel zu dieser stehende Ebene aufspannen.

Die Säulen erstrecken sich in der ersten Raumrichtung und stehen von der Fördervorrichtung, das heisst von einer Ebene, die durch die Fördervorrichtung gebildet wird, ab. Die Distanz, um welche die beiden Säulen von der Fördervorrichtung abstehen, kann je nach der maximalen mit der Vorrichtung zu schneidenden Dicke des Teigs variieren. Die Distanz ist jedoch vorzugsweise derart, dass der Messerbalken in einen genügenden Abstand zur Fördervorrichtung entlang der beiden Säulen linear bewegt werden kann, so dass die mindestens eine Messerklinge den auf der Fördervorrichtung liegenden Teig nicht berührt.

Der Messerbalken ist vorzugsweise mittels Linearführungen an den zwei Säulen gelagert. Die Linearführungen können als Gleit- oder Wälzlager ausgestaltet sein, vorzugsweise sind die Linearführungen jedoch als Schlitten ausgeführt, welche entlang einer Schiene bewegbar an der jeweiligen Säule angeordnet sind. Alternativ können die Linearführungen jedoch auch mindestens eine auf einer Welle laufende Kugelbüchse oder Gleitbuchse aufweisen.

Vorzugseise ist das mindestens eine Federelement vorgespannt, wobei die Vorspannung insbesondere veränderbar ist. Dadurch kann die vordefinierte Maximalkraft verändert werden. Die Vorspannung lässt sich beispielsweise durch das Verstellen einer Anschlagsfläche des mindestens einen Federelements einstellen.

Das mindestens eine Federelement ist vorzugswiese als Spiralfeder ausgestaltet. Alternativ kann das mindestens eine Federelement jedoch auch als Blattfeder oder Tellerfeder ausgestaltet sein. Ferner ist es alternativ auch möglich, das mindestens eine Federelement als Gasdruckfeder auszugestalten.

Vorzugsweise ist das mindestens eine Federelement ein Federpaket.

Vorzugsweise ist an einer ersten der zwei Säulen ein erster Antrieb und an der zweiten Säule ein zweiter Antrieb angeordnet, wobei der erste Antrieb und der zweite Antrieb unabhängig voneinander durch eine Steuerung der Vorrichtung angesteuert werden, um den Messerbalken in der ersten Raumrichtung linear entlang der jeweiligen Säule zu bewegen.

Dadurch kann die zum Bewegen des Messerbalkens nötige Kraft auf zwei Antriebe aufgeteilt werden, womit diese jeweils weniger Leistung aufbringen müssen, als wenn ein einzelner Antrieb vorgesehen wäre. Dadurch können die Antriebe kleiner dimensioniert werden. Zudem entfällt bei der erfindungsgemässen Vorrichtung eine Mechanik welche die Bewegung eines Antriebes auf beide Säulen überträgt, um den Messerbalken entlang beider Säulen parallel bewegen zu können. Dadurch kann die Vorrichtung günstiger und flexibler hergestellt werden und es ist weniger Unterhalt nötig, was deren Betrieb wesentlich vereinfacht.

An beiden Säulen ist jeweils ein Antrieb angeordnet, welcher durch eine Steuerung der Vorrichtung angesteuert werden kann, um den Messerbalken in der ersten Raumrichtung linear entlang der jeweiligen Säule zu bewegen. Hierzu befinden sich die beiden Antriebe jeweils mit einem Ende des Messerbalkens in Wirkverbindung. Beide Antriebe sind hierbei unabhängig voneinander von der Steuerung ansteuerbar, das heisst, dass jeder Antrieb über eine separate Leitung Steuerbefehle von der Steuerung erhält. Dies entspricht im Wesentlichen einer Parallelschaltung der beiden Antriebe. Durch die separate Ansteuerung können Latenzzeiten der beiden Antriebe sowie aufgrund von Fertigungstoleranzen entstehende Unterschiede der Bewegungsgeschwindigkeit des Messerbalkens auf den beiden Säulen ausgeglichen werden.

Mittels der Antriebe kann der Messerbalken aus einer Ruheposition, in welcher der Messerbalken in einem genügenden Abstand von der Fördervorrichtung steht, so dass die mindestens eine Messerklinge den auf der Fördervorrichtung liegenden Teig nicht berührt, hinaus in Richtung der Fördervorrichtung bewegt werden, um den Teig zu schneiden oder zu stanzen und anschliessend wieder zurück in die Ruheposition bewegt werden. Mit der erfindungsgemässen Vorrichtung kann ein Teig nicht nur ganz durchschnitten werden, sondern es ist auch möglich, den Teig nur bis zu eine vordefinierten Dicke zu schneiden beziehungsweise zu Stanzen, beispielsweise um einen dekorativen Einschnitt im Teig anzufertigen oder um eine I<nicl<stelle im Teig zu erzeugen.

Die beiden Antriebe können hierbei als Linearantriebe ausgestaltet sein. Als Linearantriebe eignen sich z.B. die im Lebensmittelbereich üblichen Pneumatikzylinder oder auch Hydraulikzylinder oder elektrische Linearantriebe. Alternativ können die Antriebe auch als Drehantriebe, zum Beispiel in der Form von Elektromotoren, insbesondere Servormotoren oder Schrittmotoren, ausgebildet sein, wobei die Drehbewegung der Drehantriebe mittels eines geeigneten Getriebes in eine Linearbewegung des Messerbalkens umgesetzt wird.

Die Steuerung umfasst vorzugsweise einen Mikrocontroller oder einen Mikrochip sowie einen insbesondere nichtflüchtigen Speicher. Vorzugsweise verfügt die Steuerung über mindestens ein Eingabemittel, wie z.B. einen Druckknopf oder ein Tastenfeld, und vorzugsweise auch über ein Ausgabemittel, wie z.B. ein Display um eine Interaktion eines Bedieners mit der Steuerung zu ermöglichen. Insbesondere bevorzugt verfügt die Steuerung hierzu über ein Touchscreen Display. Vorzugsweise wird durch die Steuerung auch ein Antriebsmittel der Fördervorrichtung gesteuert, so dass mit der Steuerung sämtliche Komponenten der Vorrichtung gesteuert werden können. Durch die Eingabe- und/oder Ausgabemittel können Einstellungen der Vorrichtung gezielt verändert werden, beispielsweise eine Fördergeschwindigkeit des auf der Fördervorrichtung aufliegenden Teigs, die Geschwindigkeit der Bewegung des Messerbalkens, die Ruheposition des Messerbalkens sowie die Schnitttiefe des Teigs, das heisst die Distanz, welche der Messerbalken von der Ruheposition aus in Richtung der Fördervorrichtung zurücklegt.

Die beiden Säulen verfügen vorzugsweise jeweils über einen Schlitten, welcher in der ersten Raumrichtung linear verschiebbar entlang dieser gelagert ist, wobei der Messerbalken an einem ersten Ende mit einem ersten Schlitten der ersten Säule über eine orthogonal zur ersten Raumrichtung, insbesondere vertikal liegende Achse drehend verbunden ist, und an einem zweiten Ende mit einem zweiten Schlitten der zweiten Säule über ein Ausgleichselement verbunden ist. Das Ausgleichselement ist über eine zweite Achse mit dem zweiten Schlitten und mit einer dritten Achse mit einem zweiten Ende des Messerbalkens drehend verbunden. Die zweite und die dritte Achse stehen parallel zur ersten Achse und sind voneinander beabstandet am Ausgleichselement angeordnet. Der erste Antrieb und der zweite Antrieb sind jeweils mit dem ersten Schlitten beziehungsweise mit dem zweiten Schlitten wirkverbunden, um den ersten Schlitten und den zweiten Schlitten in der ersten Raumrichtung linear entlang der ersten Säule beziehungsweise der zweiten Säule zu bewegen.

Durch das Ausgleichselement können Differenzen der Bewegungsgeschwindigkeit des ersten und zweiten Schlittens, die von den zwei verwendeten Antrieben stammen, ausgeglichen werden, so dass sich der Messerbalken nicht zwischen den beiden Säulen verkantet. Dasselbe gilt für geringfügige Unterschiede beim Start einer Bewegung, die durch unterschiedliche Latenzzeiten der Antriebe stammen.

Vorzugsweise ist die Steuerung derart ausgestaltet, dass der erste Antrieb und der zweite Antrieb um eine vordefinierte Zeit relativ zueinander angesteuert werden, um den ersten bzw. den zweiten Schlitten in der ersten Raumrichtung zur Fördervorrichtung hin zu bewegen, so dass der Messerbalken einen Winkel relativ zu einer Ebene der Fördervorrichtung einnimmt, wenn dieser zur Fördervorrichtung hin bewegt wird, um einen Wippschnitt eines auf der Fördervorrichtung liegenden Teiges zu ermöglichen.

Ein Wippschnitt kann bei gewissen Teigarten einen vorteilhaften Effekt auf die Schnittkanten sowie die Qualität des Teiges entlang der Schnittkanten haben, beispielsweise bei Blätterteig. Beim Wippschnitt trifft die mindestens eine Messerklinge zunächst auf einer Seite quer zur Förderrichtung auf den Teig und wird anschliessend zur entgegengesetzten Seite hin in den Teig bewegt, um diesen über dessen gesamte Breite zu schneiden.

Die Steuerung ist daher vorzugsweise derart ausgestaltet, dass ein erster der beiden Schlitten, der als erster eine Endposition erreicht, in welcher die mindestens eine Messerklinge auf der ersten Seite des Teigs diesen durschnitten hat, in dieser Endposition verbleibt, bis der zweite der beiden Schlitten ebenfalls eine Endposition erreicht, bei welcher die mindestens eine Messerklinge den Teig über dessen gesamte Breite durchschnitten hat. Anschliessend können beide Schlitten parallel zueinander oder auch zeitlich versetzt zueinander wieder in eine Grundposition bewegt werden.

Sofern die erfindungsgemässe Vorrichtung zum Schneiden eines Teigs mittels eines Wippschnitts verwendet wird, ist die mindestens eine Messerklinge vorzugsweise gekrümmt. Insbesondere bevorzugt ist in diesem Fall die mindestens eine Messerklinge in Richtung der Fördervorrichtung bzw. des darauf liegenden Teigs konvex gekrümmt. Sofern eine derartige konvex gekrümmte Messerklinge verwendet wird, ist die Steuerung vorzugsweise derart ausgebildet, dass nach Erreichen der Endposition durch den ersten Schlitten dieser wieder von der Fördervorrichtung wegbewegt wird, während der zweite Schlitten nach wie vor in Richtung der Fördervorrichtung bewegt wird, so dass ein Abrollen der konvex gekrümmten Messerklinge durch den Teig hindurch ermöglicht wird.

Vorzugsweise ist mindestens einer der zwei Schlitten zusätzlich in einer zweiten Raumrichtung, die parallel zur Förderrichtung ist, linear verschiebbar auf der jeweiligen Säule gelagert, wobei der mindestens eine Schlitten durch einen Linearantrieb entlang der zweiten Raumrichtung in die Förderrichtung und entgegen der Förderrichtung verschoben werden kann. Dadurch kann der Messerbalken zwischen den beiden Säulen in einen definierten Winkel gebracht werden.

Dies ermöglicht es, den auf der Fördervorrichtung liegenden Teig mit schrägen Schnitten zu schneiden oder zu stanzen, das heisst, dass der Teig nicht im Wesentlichen in einem rechten Winkel relativ zur Ausdehnungsrichtung der Fördervorrichtung geschnitten oder gestanzt werden kann, sondern in einem beliebigen Winkel. Der mindestens eine Schlitten ist dabei vorzugsweise derart in der zweiten Raumrichtung bewegbar, dass Schnitte mit einem Winkel bis 10°, vorzugsweise bis 7° geschnitten werden kann.

Bei dieser Ausführungsform ist der Messerbalken mindestens am ersten Schlitten und/oder am zweiten Schlitten über eine Achse, die in der ersten Raumrichtung orientiert ist, drehend gelagert. Insbesondere bevorzugt ist der Messerbalken bei dieser Ausführungsform zudem mittels eines Ausgleichelements wie weiter oben beschrieben mit dem zweiten Schlitten verbunden, um den bei der Verschiebung des mindestens einen Schlittens entlang der zweiten Raumrichtung entstehenden Unterschied des Abstandes zwischen dem ersten und zweiten Schlitten ausgleichen zu können.

Besonders bevorzugt sind beide Schlitten jeweils auf ihrer jeweiligen Säule in der zweiten Raumrichtung linear verschiebbar gelagert, wobei jeder Schlitten über einen eigenen Linearantrieb angetrieben wird. Dadurch kann bei einer Reduktion der Distanz, über welche die Schlitten in der zweiten Raumrichtung verschiebbar sind, derselbe Winl<elbereich wie bei nur einem in der zweiten Raumrichtung verschiebbar gelagerten Schlitten abgedeckt werden. Bei dieser Ausführungsform ist der Messerbalken vorzugsweise sowohl am ersten wie auch am zweiten Schlitten über eine in der ersten Raumrichtung orientierten Drehachse drehend verbunden.

Vorzugsweise verfügen die erste Säule sowie die zweite Säule über eine erste Verschiebeeinheit beziehungsweise über eine zweite Verschiebeeinheit, welche in der ersten Raumrichtung linear verschiebbar relativ zur jeweiligen Säule an dieser bewegbar gelagert sind und mittels mindestens eines ersten Antriebs bewegt werden. An der ersten Verschiebeeinheit ist ein erster Schlitten und an der zweiten Verschiebeeinheit ein zweiter Schlitten relativ zur jeweiligen Verschiebeeinheit in einer zweiten Raumrichtung, die parallel zur Förderrichtung der Fördervorrichtung steht, linear verschiebbar gelagert. An den Schlitten ist der Messerbalken jeweils an einem seiner Enden verbunden, wobei die Vorrichtung über einen dritten Antrieb verfügt, mit welchem sich der erste Schlitten sowie der zweite Schlitten in der zweiten Raumrichtung in Förderrichtung vor und entgegen der Förderrichtung auf der jeweiligen Verschiebeeinheit zurück bewegen lassen.

Dadurch kann eine Bewegung des Messerbalkens in die erste Raumrichtung, die dem Schneiden oder Stanzen eines auf der Fördervorrichtung liegenden Teigs dient, mit einer Bewegung des Messerbalkens in der zweiten Raumrichtung gekoppelt werden, so dass ein Schneiden oder Stanzen des Teigs bzw. Teigbandes bei einem kontinuierlichen Fördern des Teigs bzw. Teigbandes durch die Fördervorrichtung ermöglicht wird.

Vorzugsweise können die beiden Schlitten jeweils über den ersten bzw. den zweiten Antrieb in der ersten Raumrichtung bewegt werden. Auf diese Weise kann die Möglichkeit eines Wippschnittes des Teigs, mit den Vorteilen dieser Ausführungsform kombiniert werden.

Die erste und die zweite Verschiebeeinheit sind Komponenten der Verschiebevorrichtung. Die beiden Verschiebeeinheiten sind vorzugsweise über ein Gleit- oder Wälzlager an der jeweiligen Säule in der ersten Raumrichtung bewegbar gelagert. Die beiden Verschiebeeinheiten sind hierbei linear an den Säulen gelagert. Dies kann beispielsweise mittels eine Gleitlagers, Wälzlagers, eines Schlitten oder mindestens einer auf einer Welle laufende Kugelbüchse oder Gleitbuchse umgesetzt werden.

Der erste sowie der zweite Schlitten sind vorzugsweise mittels eine Gleit- oder Wälzlagers oder über mindestens eine auf einer Welle laufenden Kugelbüchse oder Gleitbuchse verschiebbar auf der jeweiligen Verschiebeeinheit gelagert.

Der Messerbalken kann an einem Ende über ein Ausgleichselement mit dem jeweiligen Schlitten verbunden sein. Eine derartige Ausführung der Vorrichtung wird insbesondere bevorzugt angewendet, wenn an jeder Säule ein erster bzw. zweiter Antrieb zur Bewegung des Messerbalkens in der ersten Raumrichtung angeordnet ist, die jeweils separat durch die Steuerung angesteuert werden können, um einen Wippschnitt des Teigs zu ermöglichen.

Mit dem dritten Antrieb lassen sich der erste Schlitten sowie der zweite Schlitten vorzugsweise parallel relativ zueinander in der zweiten Raumrichtung in Förderrichtung vor und entgegen der Förderrichtung zurück bewegen. Hierzu ist der dritte Antrieb mit dem ersten bzw. dem zweiten Schlitten wirkverbunden, zum Beispiel über mindestens eine Welle, mindestens ein Getriebe oder ähnlich.

In einer besonderen Ausführung kann der dritte Antrieb jedoch auch zwei Linearantriebe umfassen, wobei jeweils ein Linearantrieb auf jeder Säule oder jeder Verschiebeeinheit angeordnet ist. Dadurch können beide Schlitten unabhängig voneinander entlang der zweiten Raumrichtung bewegt werden, um auch Schnitte mit anderen Winkel als der rechte Winkel relativ zur Förderrichtung zu ermöglichen.

Vorzugsweise umfasst die Vorrichtung eine Steuerung, die derart konfiguriert ist, dass der erste Schlitten sowie der zweite Schlitten durch den dritten Antrieb mit einer ersten Geschwindigkeit, die der Geschwindigkeit der Fördervorrichtung entspricht oder um einen ersten vordefinierten Betrag höher als diese ist, in die Förderrichtung vor und mit einer zweiten vordefinierten Geschwindigkeit, die insbesondere um einen zweiten Betrag höher als die Fördergeschwindigkeit ist, entgegen der Förderrichtung zurück beweg werden.

Dadurch wird erzielt, dass der am ersten und zweiten Schlitten befestigte Messerbalken mit derselben Geschwindigkeit oder einer Geschwindigkeit, die um den ersten vordefinierten Betrag höher ist als die Geschwindigkeit der Fördervorrichtung zum Schneiden des Teigs in Förderrichtung bewegt werden kann. Nachdem der erste beziehungsweise zweite Schlitten eine vordefinierte Distanz in die Förderrichtung bewegt worden sind, wird der dritte Antrieb durch die Steuerung derart angesteuert, dass der erste und der zweite Schlitten durch den dritten Antrieb entgegen der Förderrichtung mit der zweiten vordefinierten Geschwindigkeit zurück bewegt wird. Die erste und die zweite vordefinierte Geschwindigkeit sind vorzugsweise gleich gross. Besonders bevorzugt ist jedoch die zweite vordefinierten Geschwindigkeit höher als die erste vordefinierte Geschwindigkeit.

Die Steuerung ist vorzugsweise derart konfiguriert, dass während der Bewegung des ersten Schlittens sowie des zweiten Schlittens in die Förderrichtung der mindestens eine erste Antrieb derart angesteuert wird, dass der Messerbalken durch die erste Verschiebeeinheit und die zweite Verschiebeeinheit aus einer Grundposition heraus zur Fördervorrichtung hin, und insbesondere die mindestens eine am Messerbalken befestigte Messerklinge auf die Fördervorrichtung bewegt wird, und bei der Bewegung des ersten Schlittens sowie des zweiten Schlittens entgegen der Förderrichtung der Messerbalken wieder zurück in die Grundposition bewegt wird.

Dadurch wird der Messerbalken sowie die daran befestigte mindestens eine Messerklinge auf den auf der Fördervorrichtung liegenden Teig bewegt, um diesen zu schneiden. Nach erfolgtem Schnitt wird der Messerbalken wieder von der Fördervorrichtung weg in die Grundposition bewegt.

Dadurch ist eine koordinierte Bewegung des Messerbalkens sowohl in die erste Raumrichtung wie auch in der zweiten Raumrichtung möglich. Die Koordination erfolgt dabei vorzugsweise derart, dass der Messerbalken in der ersten Raumrichtung zur Fördervorrichtung hin und gleichzeitig in der zweiten Raumrichtung in Förderrichtung bewegt wird. Dies ermöglicht ein Schneiden eines auf der Fördervorrichtung aufliegenden Teiges beziehungsweise Teigbandes in einem kontinuierlichen Betrieb der Fördervorrichtung, das heisst, ohne dass die Fördervorrichtung beim Schneiden gestoppt werden muss. Nach erfolgten Schnitt wird der Messerbalken von der Fördervorrichtung weg in die Grundposition bewegt. Sobald der Messerbalken eine definierte Strecke von der Fördervorrichtung weg bewegt ist, so dass die mindestens eine Messerklinge sich nicht mehr im Teig befindet, steuert die Steuerung den dritten Antrieb derart, dass der erste und der zweite Schlitten in der zweiten Raumrichtung entgegen der Förderrichtung zurück bewegt werden.

Vorzugsweise verfügen der erste Schlitten und der zweite Schlitten jeweils über einen Balken. Die Balken stehen in der ersten Raumrichtung von den Schlitten ab und sind in der ersten Raumrichtung linear beweglich mit einem dritten Schlitten beziehungsweise mit einem vierten Schlitten verbunden. Der Dritte Antrieb steht mit dem dritten Schlitten und dem vierten Schlitten in Wirkverbindung, um diese in der zweiten Raumrichtung vor und zurück zu bewegen.

Vorzugsweise ist der Balken des ersten Schlittens in der ersten Raumrichtung beweglich mit dem dritten Schlitten verbunden und der Balken des zweiten Schlittens ist mit dem vierten Schlitten in der ersten Raumrichtung beweglich verbunden. Mit dieser Anordnung kann auf eine möglichst einfache Art und Weise eine Übertragung der Bewegung des ersten und zweiten Schlittens in die zweite Raumrichtung erzielt werden, wobei der erste und der zweite Schlitten hierbei völlig unabhängig von dieser Bewegung in der ersten Raumrichtung bewegbar sind. Damit die Bewegung in die zweite Raumrichtung über die Balken auf den ersten und zweiten Schlitten übertragen werden kann, sind die Balken derart am dritten und vierten Schlitten angeordnet, dass diese in die zweite Raumrichtung unbeweglich relativ zu diesen sind.

Als Balken wird ein vom ersten beziehungsweise zweiten Schlitten abstehendes dreidimensionales Gebilde verstanden, insbesondere ein quaderförmiges oder stabförmiges Gebilde. Die Balken können einstückig mit dem ersten beziehungsweise zweiten Schlitten ausgebildet sein, sind jedoch vorzugsweise von diesen separate Teile, welche mechanisch und unbeweglich zu diesen mit dem ersten beziehungsweise zweiten Schlitten verbunden sind.

Der dritte Antrieb kann mit einer geeigneten Wirkverbindung mit dem dritten beziehungsweise vierten Schlitten in Verbindung stehen, wie z.B. über mindestens eine Welle, mindestens ein Getriebe oder ähnlich.

Vorzugsweise greifen die Balken in eine Gleitführung des dritten Schlittens beziehungsweise des vierten Schlittens ein oder sind über eine Wälzführung mit dem dritten Schlitten beziehungsweise dem vierten Schlitten verbunden.

Vorzugsweise greifen die Balken in eine jeweilige Nut auf dem dritten beziehungsweise vierten schlitten ein, wobei die Balken in der zweiten Raumrichtung möglichst spielfrei innerhalb der Nuten angeordnet sind. Bei dieser Ausführungsform weisen die Nuten und/oder die Balken vorzugsweise eine entsprechende Beschichtung auf oder sind mit einer Gleitfolie versehen, welche ein Gleiten der Balken innerhalb der Nuten bei möglichst kleinem Reibwiderstand ermöglicht.

Sofern die Balken über ein Wälzlager mit dem dritten beziehungsweise vierten Schlitten verbunden sind, verfügen der dritte beziehungsweise vierte Schlitten jeweils über einen zum jeweiligen Balken weisenden Fortsatz auf, wobei jeder Fortsatz über mindestens zwei Rollen verfügt, welche in der zweiten Raumrichtung beidseits entlang einer Kante des jeweiligen Balkens laufen. Dadurch wird eine Bewegung der Balken jeweils in der ersten Raumrichtung mit einem möglichst geringen Widerstand ermöglicht, wobei die Balken relativ zum dritten und vierten Schlitten in der zweiten Raumrichtung unbeweglich sind.

Alternativ können die Balken jedoch auch mittels anderer geeigneter Vorrichtungen in der ersten Raumrichtung beweglich am dritten beziehungsweise vierten Schlitten gelagert sein, zum Beispiel mittels einer auf einer Welle laufenden Kugelbüchse oder Gleitbuchse.

Vorzugsweise bewegt der dritte Antrieb die Gegendruckplatte, auf welcher die Fördervorrichtung im Bereich der Verschiebevorrichtung aufliegt, in der Förderrichtung vor und entgegen der Förderrichtung der Fördervorrichtung zurück, wobei der dritte Schlitten und der vierte Schlitten mit der Gegendruckplatte gekoppelt sind.

Durch die Gegendruckplatte wird verhindert, dass sich die Fördervorrichtung durch das Auftreffen der mindestens einen Messerklinge auf die Fördervorrichtung beziehungsweise auf einem darauf liegenden Teig im Bereich der Schneidvorrichtung durchgebogen wird. Das heisst, die Gegendruckplatte wirkt den durch die mindestens eine Messerklinge auf die Fördervorrichtung wirkenden Kräfte entgegen. Dies ist insbesondere vorteilhaft wenn die Fördervorrichtung als Förderband ausgestaltet ist.

Durch Kopplung der Gegendruckplatte mit dem dritten und vierten Schlitten bewegen sich die Gegendruckplatte sowie der Messerbalken synchron in Förderrichtung vor und zurück. Damit ist sichergestellt, dass die Gegendruckplatte stets unterhalb der Fördervorrichtung liegt, wenn die mindestens eine Messerklinge auf die Fördervorrichtung beziehungsweise einem darauf liegenden Teig auftrifft. Durch die Bewegung der Gegendruckplatte kann diese zudem in Förderrichtung kürzer ausgestaltet werden, als wenn sich diese nicht bewegen würde.

Die Gegendruckplatte ist vorzugsweise über eine Linearführung, insbesondere einem Gleit- oder Wälzlager auf einem Gestell der Vorrichtung beweglich angeordnet. Besonders bevorzugt ist die Gegendruckplatte auf einer Gleitplatte linear verschiebbar gelagert. Diese Gleitplatte ist vorzugsweise unbeweglich am Gestell der Vorrichtung angeordnet. Vorzugsweise ist auch die Fördervorrichtung am Gestell der Vorrichtung befestigt.

Die erste Verschiebeeinheit sowie die zweite Verschiebeeinheit verfügen vorzugsweise über einen fünften beziehungsweise über einen sechsten Schlitten, die relativ zur jeweiligen Verschiebeeinheit in der zweiten Raumrichtung linear verschiebbar gelagert sind. Der mindestens eine erste Antrieb ist dabei als Drehantrieb ausgestaltet, welcher über mindestens ein Exzenterelement mit dem fünften Schlitten und/oder mit dem sechsten Schlitten verbunden ist, so dass eine Rotationsbewegung eines Abtriebs des mindestens einen ersten Antriebs über das mindestens eine Exzenterelement in eine lineare Bewegung des fünften Schlitten und des sechstens Schlittens in die erste Raumrichtung übersetzt wird.

Durch das Vorsehen des mindestens einen Exzenterelements kann die lineare Verschiebung des fünften und sechsten Schlittens in der ersten Raumrichtung einfach umgesetzt werden, wobei als Antrieb ein konventioneller Drehantrieb, insbesondere ein Elektromotor, eingesetzt werden kann.

Der fünfte und der sechste Schlitten sind bei dieser Ausführungsform in der ersten Raumrichtung unbeweglich an der ersten beziehungsweise der zweiten Verschiebeeinheit angeordnet. Dadurch wird eine durch den mindestens einen Exzenter erwirkte Bewegung des fünften beziehungsweise sechsten Schlittens in die erste Raumrichtung auf die beiden Verschiebeeinheiten übertragen.

Das mindestens eine Exzenterelement ist länglich ausgebildet und steht an einem Ende in Wirkverbindung mit dem Abtrieb des mindestens einen ersten Antriebs. An einem zweiten Ende ist der Exzenter über eine Achse mit dem fünften oder sechsten Schlitten drehbar verbunden. Wird nun der als Drehantrieb ausgestaltete mindestens eine erste Antrieb in Drehbewegung gesetzt, dreht sich das mindestens eine Exzenterelement mit dem Abtrieb des mindestens einen ersten Antriebs mit. Die Achse, mit der das mindestens eine Exzenterelement mit dem fünften oder sechsten Schlitten verbunden ist, beschreibt sodann eine kreisförmige Bewegung um den Abtrieb des mindestens einen ersten Antriebs herum, wobei der Radius dieser kreisförmigen Bewegung dem Abstand zwischen Abtrieb und der Achse entspricht. Der fünfte beziehungsweise sechste Schlitten folgt dieser Drehbewegung, da der jeweilige Schlitten über die Achse mit dem Exzenterelement drehbar verbunden ist. Die Drehbewegung weist dabei eine Bewegungskomponente in der ersten Raumrichtung sowie eine Bewegungskomponente in der zweiten Raumrichtung auf. Das heisst der fünfte beziehungsweise der sechste Schlitten wird durch die Drehbewegung des Exzenterelements sowohl in der ersten wie auch in der zweiten Raumrichtung bewegt. Die Bewegung in der ersten Raumrichtung wird durch den fünften Schlitten beziehungsweise dem sechsten Schlitten auf die jeweilige Verschiebeeinheit übertragen, während sich der fünfte beziehungsweise sechste Schlitten in der zweiten Raumrichtung relativ zur jeweiligen Verschiebeeinheit bewegt.

Sofern nur ein erster Antrieb vorhanden ist, steht der Abtrieb dieses ersten Antriebs vorzugsweise über eine Welle mit zwei Exzenterelementen in Wirkverbindung, wobei ein Exzenterelement mit dem fünften Schlitten und das zweite Exzenterelement mit dem sechsten Schlitten drehend verbunden ist. Alternativ kann jedoch auch nur ein Exzenterelement vorhanden sein, welches nur mit dem fünften oder dem sechsten Schlitten drehend verbunden ist. In diesem Fall wird die Bewegung des fünften oder sechsten Schlittens über eine mechanische Verbindung, z.B. einem Verbindungsbalken auf den jeweils anderen, das heisst sechsten oder fünften Schlitten übertragen.

Vorzugsweise verfügt die Vorrichtung jedoch über einen ersten Antrieb, der über ein erstes Exzenterelement mit dem fünften Schlitten verbunden ist, sowie über einen zweiten Antrieb, der über ein zweites Exzenterelement mit dem sechsten Schlitten verbunden ist. Der erste sowie der zweite Antrieb werden bei dieser Ausführungsform vorzugsweise unabhängig voneinander von der Steuerung der Vorrichtung angesteuert. Dadurch können die Vorteile der ersten Ausführungsform, insbesondere der Wippschnitt, auch mit dieser Ausführung der Vorrichtung umgesetzt werden.

Durch das Vorsehen des fünften und sechsten Schlittens kann eine Bewegung der Verschiebeeinheiten - und damit des Messerbalkens - in die erste Raumrichtung mit der Bewegung in die zweite Raumrichtung mechanisch gekoppelt werden, wobei die Bewegungen in diese zwei Raumrichtungen unabhängig voneinander und ohne gegenseitige Beeinflussung erfolgen können. Somit lassen sich beispielsweise die beiden Verschiebeeinheiten entweder nur in die erste oder zweite Raumrichtung einzeln bewegt werden, oder die Bewegungen in die beiden Raumrichtungen lassen sich beliebig miteinander kombinieren. Dadurch wird es möglich, auch komplexe Bewegungsmuster sowie unterschiedliche Bewegungsgeschwindigkeiten in beiden Raumrichtungen ohne Weiteres umzusetzen.

In einer weiteren, bevorzugten Ausführungsform ist die erste Verschiebeeinheit und/oder die zweite Verschiebeeinheit über eine Pleuelstange mit einem Exzenterelement verbunden, welches durch den ersten Antrieb und/oder durch den zweiten Antrieb, der als Drehantrieb ausgestaltet ist, in eine Drehbewegung versetzt werden kann.

Das Exzenterelement ist länglich ausgebildet und steht über eine erste Exzenterachse, die an einem ersten Ende des Exzenterelements angeordnet ist, in Wirkverbindung mit einem Abtrieb des ersten Antriebs. An einem zweiten Ende weist das Exzenterelement eine zweite Exzenterachse auf, welche mit einem ersten Ende der Pleuelstange drehend verbunden ist. An einem zweiten Ende weist die Pleuelstange eine Pleuelachse auf, welche drehend mit der ersten Verschiebeinheit beziehungsweise mit der zweiten Verschiebeeinheit drehend verbunden ist.

Wird nun der als Drehantrieb ausgestaltete mindestens eine erste Antrieb in Drehbewegung gesetzt, dreht sich das mindestens eine Exzenterelement mit dem Abtrieb des mindestens einen ersten Antriebs mit. Die zweite Exzenterachse, mit der das mindestens eine Exzenterelement mit dem ersten Ende der Pleuelstange drehbar verbunden ist, beschreibt sodann eine kreisförmige Bewegung um den Abtrieb des mindestens einen ersten Antriebs herum, wobei der Radius dieser kreisförmigen Bewegung dem Abstand zwischen Abtrieb beziehungsweise der ersten Exzenterachse und der zweiten Exzenterachse entspricht. Das erste Ende der Pleuelstange folgt nun dieser Drehbewegung. Die Drehbewegung weist dabei eine Bewegungskomponente in der ersten Raumrichtung sowie eine Bewegungskomponente in der zweiten Raumrichtung auf. Das heisst das erste Ende der Pleuelstange wird durch die Drehbewegung des Exzenterelements sowohl in der ersten wie auch in der zweiten Raumrichtung bewegt. Die Bewegung in der ersten Raumrichtung wird durch die am zweiten Ende der Pleuelstange angeordneten Pleuelachse auf die jeweilige Verschiebeeinheit übertragen, während die Bewegung in die zweite Raumrichtung zu einer Drehung der Pleuelstange um die Pleuelachse führt. Durch diese Anordnung kann die Drehbewegung des ersten Antriebs in eine lineare Bewegung der ersten beziehungsweise zweiten Verschiebeeinheit in die erste Raumrichtung auf eine einfache Weise umgesetzt werden.

Sofern nur ein erster Antrieb vorhanden ist, steht der Abtrieb dieses ersten Antriebs vorzugsweise über eine Welle mit zwei Exzenterelementen in Wirkverbindung, wobei ein erstes Exzenterelement mit einer ersten Pleuelstange und das zweite Exzenterelement mit einer zweiten Pleuelstange drehend verbunden ist. Die erste Pleuelstange ist mit der ersten Verschiebeeinheit und die zweite Pleuelstange mit der zweiten Verschiebeeinheit drehend verbunden. Alternativ kann jedoch auch nur ein Exzenterelement vorhanden sein, welches nur über eine Pleuelstange mit der ersten Verschiebeeinheit oder der zweiten Verschiebeeinheit drehend verbunden ist. In diesem Fall wird die Bewegung der ersten Verschiebeinheit beziehungsweise der zweiten Verschiebeeinheit mechanisch auf die jeweils andere Verschiebeeinheit übertragen, beispielsweise über einen Verbindungsbalken.

Vorzugsweise verfügt die Vorrichtung jedoch über einen ersten Antrieb, der über ein erstes Exzenterelement sowie einer ersten Pleuelstange mit der ersten Verschiebeeinheit verbunden ist, sowie über einen zweiten Antrieb, der über ein zweites Exzenterelement und einer zweiten Pleuelstange mit der zweiten Verschiebeeinheit verbunden ist. Der erste sowie der zweite Antrieb werden bei dieser Ausführungsform vorzugsweise unabhängig voneinander von der Steuerung der Vorrichtung angesteuert. Dadurch können die Vorteile der ersten Ausführungsform, insbesondere der Wippschnitt, auch mit dieser Ausführung der Vorrichtung umgesetzt werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung einer ersten Variante einer nicht erfindungsgemässen Vorrichtung;
- Fig. 2: eine schematische Darstellung einer Variante der nicht erfindungsgemässen Vorrichtung gemäss Fig. 1;
- Fig. 3: die Variante gemäss Figur 2 am Anfang eines Wippschnittes;
- Fig. 4: die Variante gemäss den Figuren 2 und 3 am Ende des Wippschnittes;
- Fig. 5 und 6: eine schematische Darstellung einer weiteren Variante einer nicht erfindungsgemässen Vorrichtung;
- Fig. 7: ein schematisches Schnittbild durch eine weitere Variante einer nicht erfindungsgemässen Vorrichtung;
- Fig. 8: eine schematische Darstellung einer Variante der in der Fig. 7 gezeigten nicht erfindungsgemässen Vorrichtung;
- Fig. 9: eine perspektivische Gesamtansicht einer nicht erfindungsgemässen Vorrichtung;
- Fig. 10: eine Detailansicht der Verschiebevorrichtung der nicht erfindungsgemässen Vorrichtung gemäss Fig. 9;
- Fig. 11: einen Ausschnitt einer perspektivischen Ansicht einer weiteren Variante einer nicht erfindungsgemässen Vorrichtung;
- Fig. 12: eine schematische Darstellung einer Ausführungsform einer erfindungsgemässen Vorrichtung;
- Fig. 13: ein Schnittbild einer Variante der Ausführungsform einer erfindungsgemässen Vorrichtung gemäss Fig. 12.
Grundsätzlich sind in den Figuren gleiche Teile mit gleichen Bezugszeichen versehen.

### Wege zur Ausführung der Erfindung

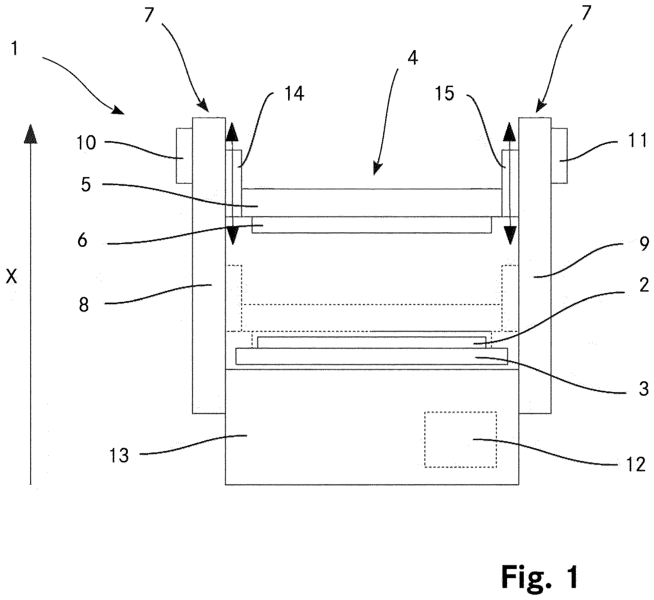

Die Figur 1 zeigt eine schematische Darstellung einer ersten Variante einer nicht erfindungsgemässen Vorrichtung 1 von vorne. Die Vorrichtung 1 verfügt über eine Fördervorrichtung 3, auf welcher ein Teig 2, welcher insbesondere als Teigband vorliegen kann, in einer Förderrichtung gefördert werden kann. Die Förderrichtung liegt bei der Darstellung gemäss der Figur 1 in Richtung des Betrachters. Die Fördervorrichtung 3 liegt auf einem Gestell 13 der Vorrichtung 1 auf. Die Vorrichtung 1 umfasst weiter eine Schneidvorrichtung 4 mit einem Messerbalken 5. Am Messerbalken ist eine Messerklinge 6 befestigt. Die Messerklinge 6 ist insbesondere lösbar mit dem Messerbalken 5 verbunden. Bei einer Abwandlung der gezeigten Variante können auch zwei oder mehr Messerklingen 6 am Messerbalken angebracht sein.

Die Vorrichtung verfügt ferner über eine Verschiebevorrichtung 7, mittels der der Messerbalken 5 in einer ersten Raumrichtung X, die orthogonal zur Förderrichtung steht. Bei der gezeigten Ausführung in der Figur 1 ist die erste Raumrichtung die vertikale Raumrichtung. Die Verschiebevorrichtung umfasst eine erste Säule 8 sowie eine zweite Säule 9. Die beiden Säulen 8, 9 erstrecken sich in der ersten Raumrichtung und stehen von der Fördervorrichtung 3 ab. Bei der gezeigten Ausführung stehen die beiden Säulen 8, 9 der Verschiebevorrichtung nach oben von der Fördervorrichtung 3 ab. Eine erste Säule 8 ist auf einer ersten Seite der Fördervorrichtung 3 angeordnet, während eine zweite Säule 9 auf der der ersten Säule 8 gegenüberliegenden Seite der Fördervorrichtung 3 angeordnet ist. Die beiden Säulen 8, 9 sind bei der gezeigten Ausführung am Gestell 13 der Vorrichtung 1 befestigt. Der Messerbalken ist an seinen zwei Enden jeweils in der ersten Raumrichtung X linear verschiebbar an einer der zwei Säulen 8, 9 gelagert. Dabei spannt sich der Messerbalken 5 über die gesamte Breite der Fördervorrichtung 3. Bei der gezeigten Ausführung sind die beiden Säulen 8, 9 derart beidseits der Fördervorrichtung 3 angeordnet, dass sich der Messerbalken 5 in einem rechten Winkel relativ zur Förderrichtung über die Fördervorrichtung 3 spannt. Ferner ist bei der gezeigten Ausführung der Messerbalken 5 an einem Ende mit einen ersten Schlitten 14, der in der ersten Raumrichtung X linear relativ zur ersten Säule 8 verschiebbar gelagert ist, und an einem zweiten Ende mit einem zweiten Schlitten 15, der in der ersten Raumrichtung X linear relativ zur zweiten Säule 9 verschiebbar gelagert ist, verbunden.

An der ersten Säule 8 ist ein erster Antrieb 10 und an der zweiten Säule 9 ist ein zweiter Antrieb 11 angeordnet. Mittels des ersten und des zweiten Antriebs 10, 11 lässt sich der Messerbalken linear entlang der jeweiligen Säule 8, 9 linear in der ersten Raumrichtung bewegen. Dabei kann der Messerbalken 5 zur Fördervorrichtung 3 hin und von dieser weg bewegt werden. Durch eine Bewegung des Messerball<ens 5 durch die beiden Antriebe 10, 11 zur Fördervorrichtung 3 hin kann ein auf der Fördervorrichtung 3 liegender Teig 2 mittels der Messerklinge 6 geschnitten oder gestanzt werden (gestrichelte Darstellung). Nach erfolgtem Schnitt kann der Messerbalken 5 wieder von der Fördervorrichtung weg bewegt werden. Hierbei ist anzumerken, dass zum Schneiden des Teigs 2 bei der in der Figur 1 gezeigten Variante die Fördervorrichtung 3 kurzzeitig angehalten werden kann. Sofern der Messerbalken 5 jedoch schnell genug bewegt wird, ist ein Anhalten der Fördervorrichtung 3 nicht nötig. Nach erfolgten Schnitt kann mittels der Fördervorrichtung 3 der Teig 2 um eine vordefinierte Distanz in Fördervorrichtung bewegt werden, bevor ein weiterer Schnitt erfolgt. Bei der in der Figur 1 gezeigten Variante der erfindungsgemässen Vorrichtung 1 werden der erste Antrieb 10 sowie der zweite Antrieb 11 jeweils unabhängig voneinander durch eine Steuerung 12 angesteuert. Das heisst, dass die Bewegung des Messerbalkens 5 entlang der ersten Säule 8 und der zweiten Säule 9 unabhängig voneinander gesteuert werden kann.

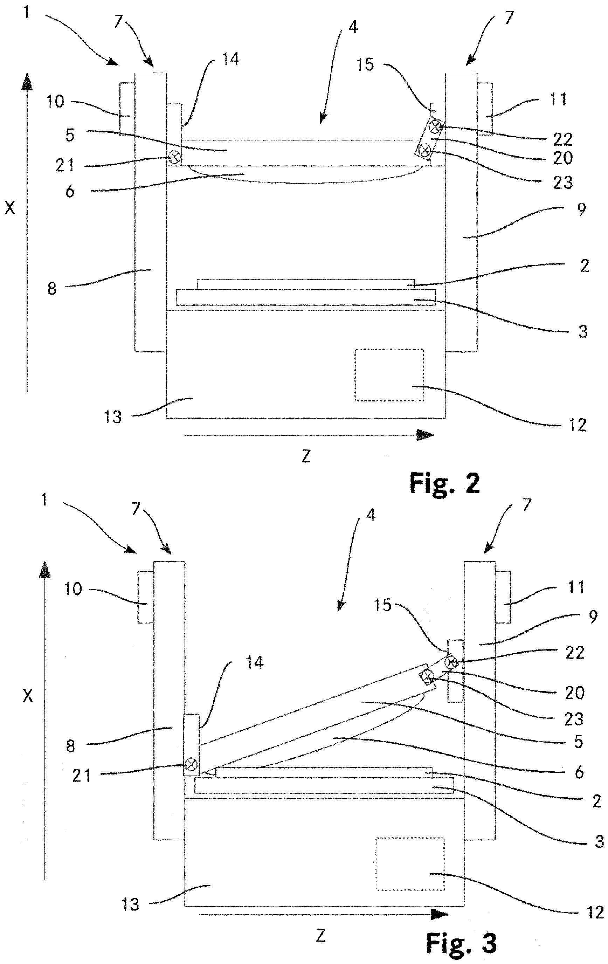

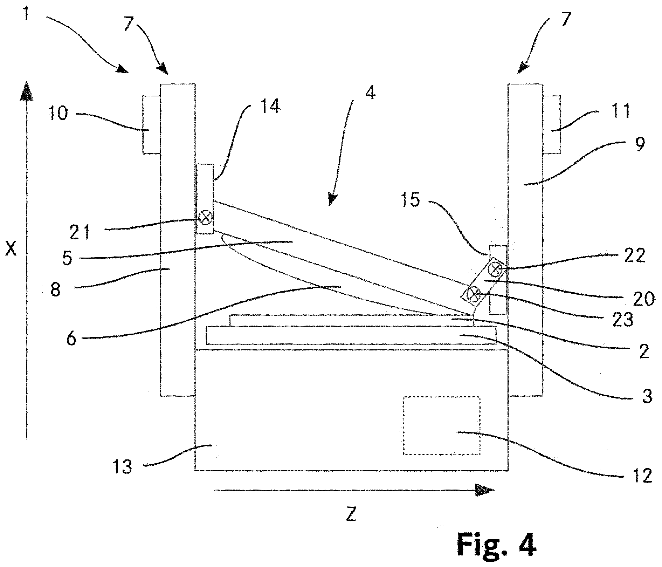

Die Figur 2 zeigt eine Variante der in der Figur 1 gezeigten nicht erfindungsgemässen Vorrichtung 1. Bei dieser Variante ist der Messerbalken 5 an einem seiner Enden über ein Ausgleichselement 20 mit dem zweiten Schlitten 15 verbunden. Am anderen Ende ist der Messerbalken 5 über eine erste Achse 21, welche orthogonal zur ersten Raumrichtung X und parallel zur Förderrichtung steht, drehend mit dem ersten Schlitten 14 verbunden. Das Ausgleichselement 20 ist über eine zweite Achse 22 drehend mit dem zweiten Schlitten 15 und über eine dritte Achse 23 drehend mit dem Messerbalken 5 verbunden. Die zweite Achse 22 und die dritte Achse 23 sind parallel zur ersten Achse 21 ausgerichtet. Durch das Ausgleichselement 20 kann ein Verkanten des Messerbalkens, der bei einem zeitlich verzögerten Start der Bewegung von einem der Schlitten 14, 15 in der ersten Raumrichtung X verursacht würde, verhindert werden, da sich durch das Ausgleichselement die Abstandsvergrösserung zwischen den Schlitten 14, 15 in eine dritten Raumrichtung Z ausgleichen. Ausserdem kann mittels des Ausgleichselements 20 der Messerbalken 5 in einem Winkel relativ zu einer Ebene, die durch die Fördervorrichtung 3 aufgespannt wird, einnehmen. Eine derartige gewinkelte Position des Messerbalkens 5 relativ zur Ebene der Fördervorrichtung 3 kann dadurch erzielt werden, dass die Steuerung 12 den ersten Antrieb 10 und den zweiten Antrieb 11 zeitlich um eine vordefinierte Zeit versetzt ansteuert, um den Messerbalken 5 zur Fördervorrichtung hin zu bewegen. Die Steuerung 12 ist daher entsprechend ausgestaltet, um diesen Bewegungsablauf durchzuführen. Dadurch kann ein Wippschnitt durchgeführt werden, wie dies in den Figuren 3 und 4 dargestellt ist. Hierzu ist die Messerklinge 6 vorzugsweise wie in der Figur 2 gezeigt gekrümmt ausgeführt, wobei die Messerklinge 6 zur Fördervorrichtung 3 - und somit zu einem darauf liegenden Teig 2 - hin eine konvexe Wölbung aufweist.

Die Figur 3 zeigt die erste Variante der nicht erfindungsgemässe Vorrichtung 1 in der Variante gemäss der Figur 2 am Beginn eines Wippschnitts durch den Teig 2. Beim Wippschnitt wird zunächst der erste Schlitten 14 in der ersten Raumrichtung X in Richtung der Fördervorrichtung 3 durch den ersten Antrieb 10 bewegt, soweit, bis die Messerklinge 6 den Teig 2 auf der Seite der Fördervorrichtung 3, welche zur ersten Säule hin liegt, durchschnitten hat. Zeitlich um eine erste vordefinierte Zeit verzögert wird der zweite Schlitten 15 durch den zweiten Antrieb 11 in der ersten Raumrichtung X zur Fördervorrichtung 3 hin bewegt. Durch die zeitliche Verzögerung nimmt der Messerbalken 5 und die daran angebrachte Messerklinge 6 eine relativ zur Ebene der Fördervorrichtung 3 gewinkelte Position ein. Dabei dreht sich der Messerbalken um die erste Achse 21 relativ zum ersten Schlitten 14 um den entsprechenden Winkel. Da der zwischen dem ersten Schlitten 14 und dem zweiten Schlitten 15 liegende Abstand durch die unterschiedliche Position der beiden Schlitten 14, 15 beziehungsweise der Schrägstellung des Messerbalkens 5 zunimmt, wird das Ausgleichselement 20 um die zweite Achse 22 und um die dritte Achse 23 gedreht, um den vergrösserten Abstand auszugleichen.

Um den Wippschnitt auszuführen, steuert die Steuerung 12 den ersten Antrieb 10 und den zweiten Antrieb 12 anschliessend derart, dass sich der erste Schlitten 14 wieder von der Fördervorrichtung weg bewegt, während der zweite Schlitten 15 zur Fördervorrichtung 3 hin bewegt wird, was eine Wippbewegung des Messerbalkens 5 und der an diesem angebrachten Messerklinge 6 bewirkt. Diese Bewegungen werden fortgesetzt, bis die Messerklinge 6 den Teig 2 über seine gesamte Breite geschnitten hat. Dieser Zustand wird in der Figur 4 gezeigt. Anschliessend werden der erste Schlitten 14 und der zweite Schlitten 15 wieder in die Positionen gemäss der Figur 2 bewegt. Hierzu steuert die Steuerung 12 den ersten Antrieb 10 und den zweiten Antrieb 11 entsprechend.

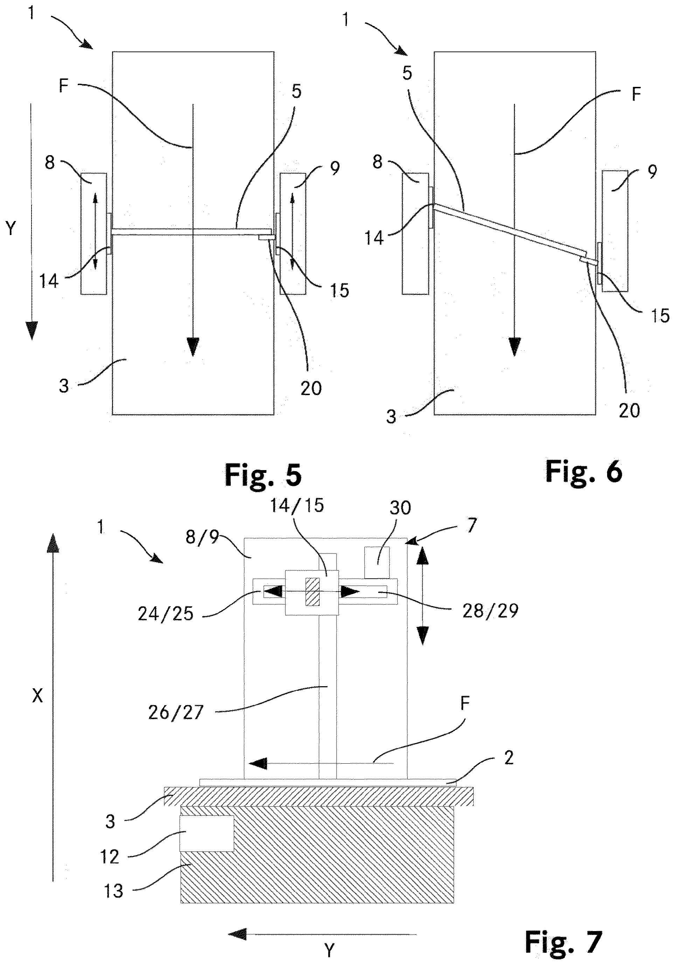

Die Figuren 5 und 6 zeigen eine schematische Darstellung einer weiteren Variante einer nicht erfindungsgemässen Vorrichtung 1 von oben. Bei dieser Variante sind der erste Schlitten 14 sowie der zweite Schlitten 15 zusätzlich zur ersten Raumrichtung X (die in den Figuren 5 und 6 in Betrachtungsrichtung liegen) in einer zweiten Raumrichtung Y relativ zur ersten Säule 8 beziehungsweise der zweiten Säule 9 linear verschiebbar gelagert. Die zweite Raumrichtung Y liegt parallel zur Förderrichtung F der Fördervorrichtung 3. Durch diese Verschiebbarkeit des ersten Schlittens 14 und des zweiten Schlittens 15 in der zweiten Raumrichtung Y lässt sich der Messerbalken 5 relativ zur Förderrichtung F in einen beliebigen Winkel bringen. Dadurch wird es möglich, ein auf der Fördervorrichtung 3 liegender Teig 2 nicht nur in einem rechten Winkel relativ zur Förderrichtung F zu schneiden, sondern in einem beliebigen Winkel, das heisst, es werden auch relativ zur Förderrichtung F schräge Schnitte ermöglicht, wie dies in der Figur 6 ersichtlich ist. Bei dieser Variante ist der Messerbalken 5 analog zur Variante gemäss der Figuren 2 bis 4 über ein Ausgleichselement 20 mit dem zweiten Schlitten 15 verbunden. Dies um den sich je nach Position der Schlitten 14, 15 in der zweiten Raumrichtung Y relativ zueinander sich veränderten Abstand zu kompensieren. Bei dieser Variante ist der Messerbalken 5 zusätzlich zur ersten Achse 21 um eine vierte Achse (nicht gezeigt), die parallel zur ersten Raumrichtung X steht, drehend mit dem ersten Schlitten 14 verbunden. Entsprechend ist auch das Ausgleichselement 20 zusätzlich zur zweiten Achse 22 über eine fünfte Achse (nicht gezeigt), welche parallel zur ersten Raumrichtung X steht, mit dem zweiten Schlitten 15 drehend verbunden. Mittels der vierten und der fünften Achse kann der Messerbalken 5 relativ zur Förderrichtung F in einen definierten Winkel gedreht werden. Es ist anzumerken, dass mit dieser Variante auch ein Schneiden eines auf der Fördervorrichtung 3 liegenden Teiges bei kontinuierlichem Betrieb der Fördervorrichtung 3 realisiert werden kann, da der Messerbalken 5 beim Schneiden synchron zur Fördervorrichtung 3 in die Förderrichtung F bewegt werden kann und nach erfolgtem Schnitt während der Bewegung des Messerball<ens 5 von der Fördervorrichtung 3 weg entgegen der Förderrichtung F wieder zurück bewegt wird. Mit dieser Variante lässt sich im Wesentlichen derselbe Effekt erzeugen, wie mit der nachfolgend beschriebenen Variante einer nicht erfindungsgemässen Vorrichtung 1 erzielt wird.

Die Figur 7 zeigt ein schematisches Schnittbild durch eine weitere Variante einer nicht erfindungsgemässen Vorrichtung 1. Bei dieser Variante verfügt die Vorrichtung wie die erste Variante über eine Fördervorrichtung 3, auf welcher ein Teig 2 in eine Förderrichtung F gefördert werden kann. Die Fördervorrichtung 3 ist auf einem Gestell 13 der Vorrichtung 1 angeordnet. Die Vorrichtung 1 verfügt ferner über eine Verschiebevorrichtung 7, welche eine erste Säule 8 und eine zweite Säule 9 umfasst. Die Säulen 8, 9 sind beidseits der Fördervorrichtung 3 angeordnet. Zwischen den Säulen ist ein Messerbalken 5 befestigt, welcher in einer ersten Raumrichtung X linear verschiebbar an den Säulen 8, 9 gelagert ist, so dass der Messerbalken in der ersten Raumrichtung X zur Fördervorrichtung 3 hin und von dieser wieder weg bewegt werden kann. Hierzu verfügt die Verschiebevorrichtung 7 über mindestens einen ersten Antrieb (nicht gezeigt). Am Messerbalken 5 ist eine Messerklinge 6 (nicht gezeigt) befestigt. Durch eine Bewegung des Messerbalkens 5 hin zur Fördervorrichtung 3 kann mittels der Messerklinge 6 der Teig 2 geschnitten werden. Bei dieser Variante kann der Messerbalken 5 zusätzlich in einer zweiten Raumrichtung Y, welche orthogonal zur ersten Raumrichtung X und parallel zur Förderrichtung F liegt, bewegt werden. Hierzu verfügt die Verschiebevorrichtung 7 über eine erste Verschiebeeinheit 24 sowie über eine zweite Verschiebeeinheit 25. Die erste Verschiebeeinheit 24 ist in der ersten Raumrichtung X über eine erste Linearführung 26 verschiebbar auf der ersten Säule 8 angeordnet, während die zweite Verschiebeeinheit 25 in der ersten Raumrichtung X über eine zweite Linearführung 27 verschiebbar auf der zweiten Säule 9 angeordnet ist. Auf der ersten Verschiebeeinheit 24 ist ein erster Schlitten 14 über eine dritte Linearführung 28 in der zweiten Raumrichtung Y verschiebbar relativ zur zweiten Säule 9 gelagert. Ein Ende eines Messerbalkens 5, an welchem ein Schneidmesser 6 (nicht gezeigt) angebracht ist, ist am ersten Schlitten 14 befestigt. Gleichermassen ist auf der zweiten Verschiebeeinheit 25 ein zweiter Schlitten 15 über eine vierte Linearführung 29 in der zweiten Raumrichtung Y verschiebbar angeordnet. Der Messerbalken 5 ist an einem zweiten Ende mit dem zweiten Schlitten 15 befestigt. Der erste Schlitten 14 und der zweite Schlitten 15 werden über einen dritten Antrieb 30 in der zweiten Raumrichtung Y bewegt.

Durch die Möglichkeit den Messerbalken sowohl in der ersten Raumrichtung X wie auch in der zweiten Raumrichtung Y bewegen zu können, kann der Teig 2 bei einer kontinuierlichen Förderung desselben in der Förderrichtung F durch die Fördervorrichtung 3 ermöglicht werden. Das heisst, die Fördervorrichtung 3 muss nicht für jeden Schnitt des Teigs durch die am Messerbalken 5 befestigten Messerklinge 6 angehalten werden. Entsprechend verfügt die Vorrichtung 1 über eine Steuerung 12, mit welcher der erste Antrieb sowie der dritte Antrieb, sowie wahlweise auch ein Antrieb der Fördervorrichtung (nicht gezeigt) gesteuert werden kann. Die Steuerung 12 ist derart konfiguriert, dass der erste Schlitten 14 und der zweite Schlitten 15 durch den dritten Antrieb 30 mit einer ersten Geschwindigkeit, welche gleich gross ist wie die Geschwindigkeit der Fördervorrichtung 3 oder um einen ersten vordefinierten Betrag höher als diese ist, in die Förderrichtung F bewegt werden. Ferner ist die Steuerung 12 derart konfiguriert, dass der erste Schlitten 14 und der zweite Schlitten 15 gleichzeitig mit ihrer Bewegung in die zweite Raumrichtung Y in der Förderrichtung F in der ersten Raumrichtung X zur Fördervorrichtung 3 hin bewegt werden. Hierzu steuert die Steuerung 12 den ersten Antrieb entsprechend an. Nachdem der Schnitt des Teigs 2 erfolgt ist, das heisst nachdem die Messerklinge 6 sich durch den Teig 2 hindurch bewegt hat, werden Verschiebeeinheiten 24, 25 von der Fördervorrichtung 3 in der ersten Raumrichtung X weg bewegt. Nachdem sich die Verschiebeeinheiten 24, 25 und somit auch die Schlitten 14 und der Messerbalken 5 mit der Messerklinge 6 um eine bestimmte Distanz von der Fördervorrichtung 3 weg bewegt haben, steuert die Steuerung den dritten Antrieb 30 derart an, dass sich die beiden Schlitten 14, 15 entgegen der Förderrichtung F bewegen. Die Steuerung 12 ist daher derart konfiguriert, um diese Koordination der Bewegungen über eine entsprechende Ansteuerung des ersten Antriebs sowie des dritten Antriebs 30 zu erzielen. Die Schlitten 14, 15 weisen bei ihrer Bewegung entgegen der Förderrichtung F eine höhere Geschwindigkeit auf als bei ihrer Bewegung in Förderrichtung.

Es ist anzumerken, dass die beiden Säulen 8, 9 gleich ausgestaltet sind. Daher weist die Figur 7 entsprechend die Referenzzeichen für jeweils beide Säulen 8, 9 auf.

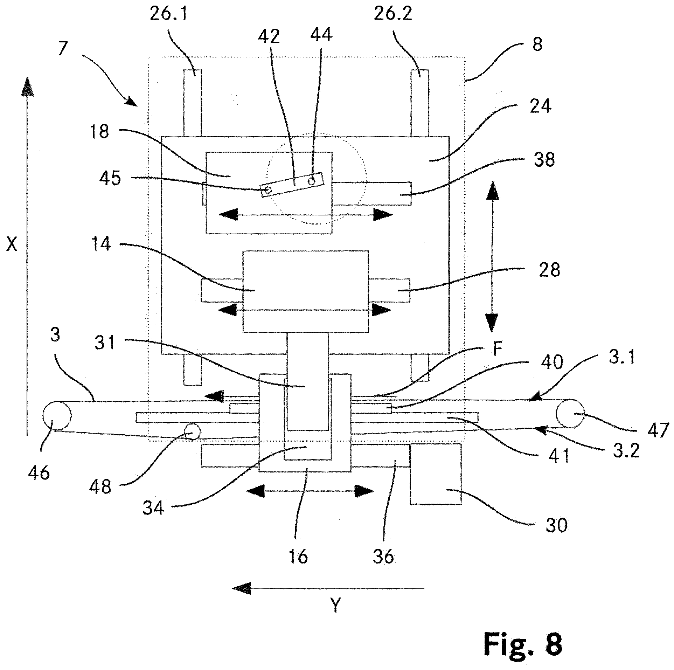

Die Figur 8 zeigt schematisch eine Variante der in der Figur 7 gezeigten Variante der erfindungsgemässen Vorrichtung 1. Bei der Darstellung der Figur 8 ist die Verschiebevorrichtung 7 im Vergleich zu den restlichen Komponenten der Vorrichtung übergross dargestellt, wobei lediglich die Verschiebevorrichtung 7 der ersten Säule 8 gezeigt wird. Es ist jedoch anzumerken, dass die Verschiebevorrichtung 7 der zweiten Säule 9 gleich aufgebaut ist.

Die erste Verschiebeeinheit 24 ist über zwei erste Linearführungen 27.1, 27.2 in der ersten Raumrichtung X relativ zur ersten Säule verschiebbar gelagert. Auf der ersten Verschiebeeinheit 24 ist der erste Schlitten 14 über die dritte Linearführung 28 in der zweiten Raumrichtung Y verschiebbar gelagert. Der erste Schlitten 14 umfasst einen ersten Balken 31 der vom ersten Schlitten 14 in der ersten Raumrichtung X absteht. Dieser erste Balken 31 greift in eine erste Führung 34 ein, die Teil eines dritten Schlittens 16 ist. Der dritte Schlitten 16 ist in der zweiten Raumrichtung Y über eine fünfte Linearführung 38 verschiebbar gelagert. Der dritte Schlitten 16 wird durch den dritten Antrieb 30 in der zweiten Raumrichtung Y in Richtung der Förderrichtung F und entgegen der Förderrichtung F bewegt. Der erste Balken 31 ist lediglich in der ersten Raumrichtung X innerhalb der Führung 34 bewegbar, nicht jedoch in der zweiten Raumrichtung Y. Daher wird eine Bewegung des dritten Schlittens 16 in die Förderrichtung F sowie entgegen der Förderrichtung F über den ersten Balken 31 auf den ersten Schlitten 14 übertragen. Dadurch, dass der erste Balken 31 in der ersten Raumrichtung X innerhalb der ersten Führung 34 und somit relativ zum dritten Schlitten 16 in dieser Raumrichtung bewegbar ist, erfolgt die Übertragung der Bewegung des dritten Schlittens 16 auf den ersten Balken 31 sowie in der Folge auf den ersten Schlitten 14 in der zweiten Raurichtung Y beziehungsweise in der Förderrichtung F und entgegen der Förderrichtung F unabhängig von einer Bewegung des ersten Schlittens 14 in der ersten Raumrichtung X.

Bei der gezeigten Variante der Vorrichtung 1 gemäss der Figur 8 ist die Fördervorrichtung 3 als Förderband ausgestaltet. Das Förderband wird über zwei Walzen 46, 47 im Wesentlichen jeweils um 180° umgelenkt, so dass das Förderband einen oberen Teil 3.1 sowie einen unteren Teil 3.2 aufweist. Der Teig 2 wird auf dem oberen Teil 3.1 gefördert. Daher ist die Förderrichtung F die Richtung, in welcher sich der obere Teil 3.1 bewegt wird. Um das Förderband unter Spannung zu halten, weist die Vorrichtung 1 ferner eine bewegliche Spannwalze auf. Zwischen dem oberen Teil 3.1 und dem unteren Teil 3.2 ist eine Gegendruckplatte 40 angeordnet, auf welcher der obere Teil 3.1 des Förderbandes aufliegt bzw. läuft. Die Gegenrucl<platte 40 verhindert ein Durchbiegen des oberen Teils 3.1 des Förderbandes, insbesondere wenn ein auf dem oberen Teil 3.1 aufliegender Teig durch die Messerklinge 5 geschnitten wird. Die Gegendruckplatte 40 ist mit dem dritten Schlitten 16 fest verbunden, so dass die Gegendruckplatte 40 durch die Bewegung des dritten Schlittens 16 synchron mit diesem in die Förderrichtung F und entgegen der Förderrichtung F mitbewegt wird. Hierzu ist die Gegendruckplatte 40 auf einer Gleitplatte 41 angeordnet, welche als Gleitlager für erstere fungiert.

Die Bewegung der ersten Verschiebeeinheit 24 in der ersten Raumrichtung X erfolgt durch den ersten Antrieb 10, dessen Abtrieb in Wirkverbindung mit einer fixen, ersten Exzenterachse 44, welche an einem ersten Ende eines ersten Exzenterelements 42 auf das Exzenterelement 42 angeordnet ist, steht. Durch diese Wirkverbindung wird eine Drehbewegung des Abtriebs des ersten Antriebs 10 auf das Exzenterelement 42 über die erste Exzenterachse 44 übertragen. An einem zweiten Ende ist das Exzenterelement 42 über eine zweite Exzenterachse drehend mit einem fünften Schlitten 18 verbunden. Der dritte Schlitten 16 ist über eine siebte Linearführung 38 in der zweiten Raumrichtung Y relativ zur ersten Verschiebeeinheit 24 verschiebbar gelagert. Da das Exzenterelement 42 durch die Wirkverbindung mit dem Abtrieb des ersten Antriebs 10 in Drehung versetzt wird, vollführt die zweite Exzenterachse 45 eine kreisrunde Bewegung um die erste Exzenterachse 44 aus (gepunktet dargestellt). Diese kreisrunde Bewegung weist eine Bewegungskomponente in der ersten Raumrichtung X sowie eine Bewegungskomponente in der zweiten Raumrichtung Y auf. Diese Bewegung überträgt sich über die zweite Exzenterachse 45 auf den fünften Schlitten 16. Die Bewegungskomponente in der zweiten Raumrichtung Y versetzt den fünften Schlitten 16 in eine Hin- und Herbewegung in die zweite Raumrichtung Y entlang der siebten Linearführung 38. Da der fünfte Schlitten 18 in der ersten Raumrichtung X relativ zur ersten Verschiebeeinheit 24 jedoch nicht beweglich ist, wird die Bewegungskomponente in der ersten Raumrichtung X vom fünften Schlitten 16 auf die erste Verschiebeeinheit 24 übertragen. Dadurch kann die erste Verschiebeeinheit 24 in der ersten Raumrichtung X in Bewegung versetzt werden. Da auch der erste Schlitten 14 in der ersten Raumrichtung X relativ zur ersten Verschiebeeinheit 24 unbeweglich ist, überträgt sich die Bewegung der ersten Verschiebeeinheit 24 in der ersten Raumrichtung X auf den ersten Schlitten 14 und dadurch auf den Messerbalken 5 mit der Messerklinge 6.

Durch das Vorsehen des ersten Schlittens 14 sowie des fünften Schlittens 18 auf der ersten Verschiebeeinheit 24 kann der Messerbalken 5 in der ersten Raumrichtung X völlig unabhängig von dessen Bewegung in der zweiten Raumrichtung Y erfolgen. Auch die Bewegung in der zweiten Raumrichtung Y erfolgt dank deren Übertragung mittels des ersten Balkens 31 völlig unabhängig von der Bewegung des fünften Schlittens 18 sowie der ersten Verschiebeeinheit 24. Durch diese Variante lassen sich auch komplexe Bewegungsabfolgen des Messerbalkens 5 in der ersten Raumrichtung X und der zweiten Raumrichtung Y vollführen.

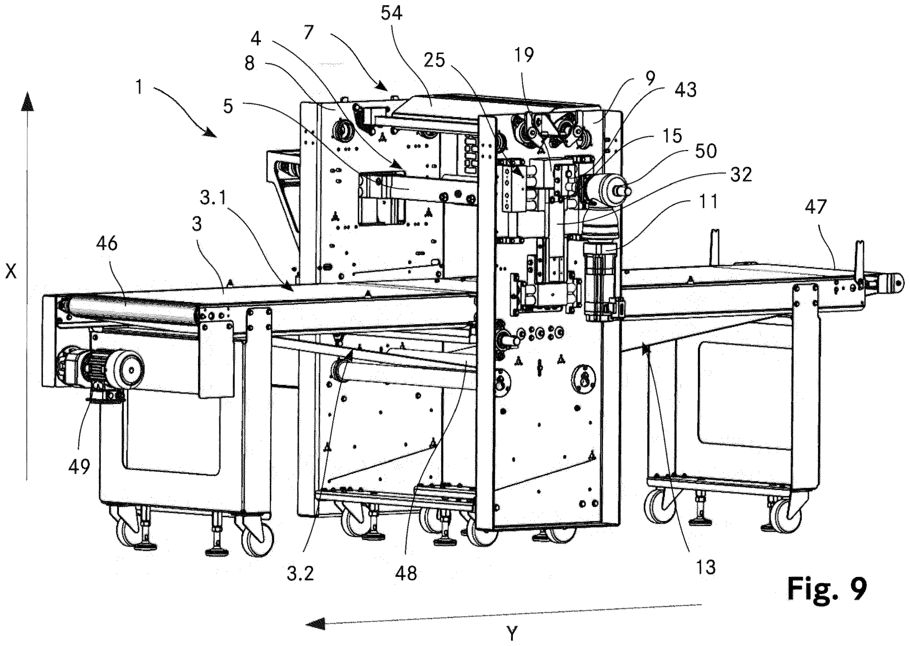

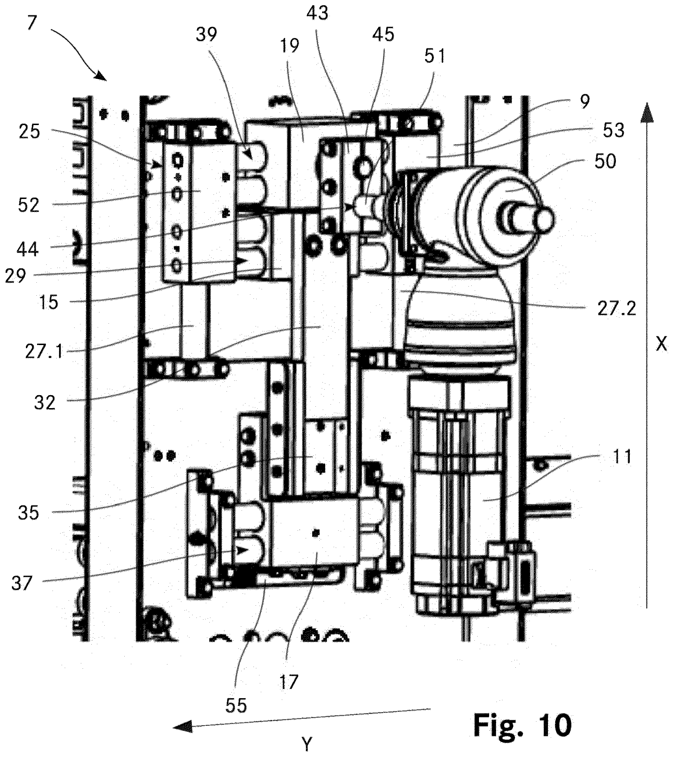

Die Figur 9 zeigt eine perspektivische Gesamtansicht einer nicht erfindungsgemässen Vorrichtung 1 gemäss der in Figur 8 gezeigten Variante. Im Unterschied zur Figur 8 ist jedoch die Verschiebevorrichtung 7 der zweiten Säule 9 ersichtlich. Die Figur 10 zeigt dabei eine Detailaufnahme der Verschiebevorrichtung 7 an der zweiten Säule 9 gemäss der Variante von Figur 9.

Bei der gezeigten Variante ist die Fördervorrichtung 3 als Förderband ausgestaltet. Dieses wird wiederum um die erste Walze 46 und um die zweite Walze 47 im Wesentlichen um 180° umgelenkt. Dadurch entsteht ein oberer Teil 3.1 sowie ein unterer Teil 3.2 des Förderbandes. Ein Teig 2 wird stets auf dem oberen Teil 3.1 aufgelegt und gefördert. Damit das Förderband gespannt bleibt, ist die Spannwalze 48 vorgesehen. Die Spannwalze ist insbesondere in der ersten Raumrichtung X beweglich angeordnet und in Richtung eines Bodens, auf welchem die Vorrichtung 1 steht, vorgespannt. Grundsätzlich kann die Spannung des Förderbandes auch anders erzielt werden, als mit der gezeigten Spannwalze 48, so zum Beispiel durch eine vorgespannte und in der Förderrichtung F beweglich gelagerten Umlenkwalze.

Beidseits der Fördervorrichtung 3 sind die erste Säule 8 und die zweite Säule 9 angeordnet. Diese erstrecken sich in der ersten Raumrichtung X und stehen von der Fördervorrichtung 3 ab. Bei der gezeigten Variante stehen die beiden Säulen 8, 9 beidseits von der Fördervorrichtung 3 ab. An den zwei Säulen 8, 9 sind die Komponenten der Verschiebevorrichtung 7 angeordnet. Der Aufbau der Komponenten der Verschiebevorrichtung 7 sowohl auf der ersten Säule 8 wie auch an der zweiten Säule 9 sind im Wesentlichen gleich. Zwischen den beiden Säulen 8, 9 ist der Messerbalken 5 angeordnet, welcher zur Schneidvorrichtung 4 gehört und auf der Figur 9 ohne Messerklinge dargestellt ist. Der Messerbalken 5 kann mittels der Verschiebevorrichtung 7 sowohl in der ersten Raumrichtung X wie auch in der zweiten Raumrichtung Y jeweils unabhängig bewegt werden. Oberhalb der Fördervorrichtung 3 sind die beiden Säulen 8, 9 durch eine Abdeckung 54 miteinander verbunden. Die Abdeckung 54 verhindert, dass im Betrieb der Vorrichtung ein Bediener der Vorrichtung 1 in den Bewegungsbereich des Messerbalkens 5 greifen kann und dient somit der Sicherheit.

Die Verschiebevorrichtung 7 auf der zweiten Säule 9 ist in der Figur 10 vergrössert dargestellt. Diese umfasst eine zweite Verschiebeeinheit 25, welche über eine zweite Linearführung 27 in der ersten Raumrichtung X relativ zur zweiten Säule 9 verschiebbar gelagert ist. Die Verschiebeeinheit umfasst bei dieser Variante eine erste Gleitbuchse 52 sowie eine zweite Gleitbuchse 53. Die zweite Linearführung 27 umfasst bei der gezeigten Variante zwei Wellen 27.1, 27.2, auf denen jeweils die erste Gleitbuchse 52 beziehungsweise die zweite Gleitbuchse 53 verschiebbar angeordnet sind. Die beiden Gleitbuchsen 52, 53 der zweiten Verschiebeeinheit sind über vier Wellen, die sich in der zweiten Raumrichtung Y erstrecken, miteinander verbunden. Jeweils zwei dieser Wellen bilden eine vierte Linearführung 29 sowie zwei Wellen eine achte Linearführung 39. Auf der vierten Linearführung 29 ist der zweite Schlitten 15 linear verschiebbar angeordnet.

Der zweite Schlitten 15 weist einen zweiten Balken 32 auf, der von diesem in Richtung der Fördervorrichtung 3 in der ersten Raumrichtung X absteht. Der zweite Balken 32 ist an seinem freien Ende in eine zweite Führung 35 in der ersten Raumrichtung X linear verschiebbar aufgenommen. Die zweite Führung 35 ist im Wesentlichen als Nut ausgebildet und ist mit einem vierten Schlitten 17 verbunden, welcher mittels einer sechsten Linearführung 37, welche wiederum über zwei Wellen verfügt, in der zweiten Raumrichtung Y bewegbar an der zweiten Säule 9 gelagert. Im Bereich des vierten Schlittens 17 weist die zweite Säule 9 über eine erste Ausnehmung 55 auf. Der vierte Schlitten 17 ist in dieser ersten Ausnehmung 55 fest mit einer Kante der Gegendruckplatte 40 verbunden. Die Gegendruckplatte 40 ist an der gegenüberliegenden Seite an einer Kante mit dem dritten Schlitten 16, der Teil der Verschiebevorrichtung 7 an der ersten Säule 8 ist, fest verbunden. Der dritte Schlitten 16 wird mittels des dritten Antriebs 30 in der zweiten Raumrichtung Y in Förderrichtung F und entgegen der Förderrichtung F angetrieben. Diese Bewegung überträgt sich über die Gegendruckplatte 40 auch auf den vierten Schlitten 17, so dass sich dieser ebenfalls in der zweiten Raumrichtung Y in Förderrichtung F und entgegen der Förderrichtung F bewegen lässt. Diese Bewegung wird über die zweite Aufnahme 35 auf den zweiten Balken 32 und somit auch auf den zweiten Schlitten 15 übertragen. Dadurch, dass der zweite Balken 35 in der ersten Raumrichtung X bewegbar relativ zur zweiten Aufnahme 35 gelagert ist, erfolgt die Übertragung der Bewegung in der zweiten Raumrichtung Y somit unabhängig von einer Bewegung des zweiten Balkens 35 beziehungsweise des zweiten Schlittens 15 in der ersten Raumrichtung X.

Die Bewegung des zweiten Schlittens 15 in der ersten Raumrichtung X erfolgt durch eine Übertragung der Bewegung der zweiten Verschiebeeinheit 25 in diese Richtung, da der zweite Schlitten 15 in der ersten Raumrichtung X relativ zur zweiten Verschiebeeinheit 25 unbeweglich gelagert ist. Die Bewegung der zweiten Verschiebeeinheit in der ersten Raumrichtung erfolgt über eine Übertragung der Bewegung eines sechsten Schlittens 19, der über die achte Linearführung 39 in der zweiten Raumrichtung Y, nicht jedoch in der ersten Raumrichtung X verschiebbar auf der zweiten Verschiebeeinheit 25 gelagert ist. Der Antrieb des sechsten Schlittens 19 in der ersten Raumrichtung X erfolgt über ein zweites Exzenterelement 43, welches an einem zweiten Ende drehend über eine zweite Exzenterachse 45 mit dem zweiten Exzenterelement 43 verbunden ist. An seinem ersten Ende ist das zweite Exzenterelement 43 über eine feste, erste Exzenterachse 44 mit einem Abtrieb 45 eines zweiten Antriebs 11 wirkverbunden. Der zweite Antrieb 11 ist ein Drehantrieb in der Form eines Elektromotors, der über ein Getriebe 50 mit der ersten Exzenterachse 44 in Wirkverbindung steht. Durch die Drehbewegung des zweiten Exzenterelements 43 um die erste Exzenterachse 44, welche durch den zweiten Drehantrieb 11 erfolgt, wird die zweite Exzenterachse 45 eine kreisrunde Bewegung versetzt, was in einer Bewegung des sechsten Schlittens 19 in die erste Raumrichtung X und die zweite Raumrichtung Y resultiert, wie dies bereits weiter oben im Zusammenhang mit den auf der ersten Säule angeordneten Komponenten der Verschiebevorrichtung auf der ersten Säule für die Variante gemäss der Figur 8 dargelegt wird.

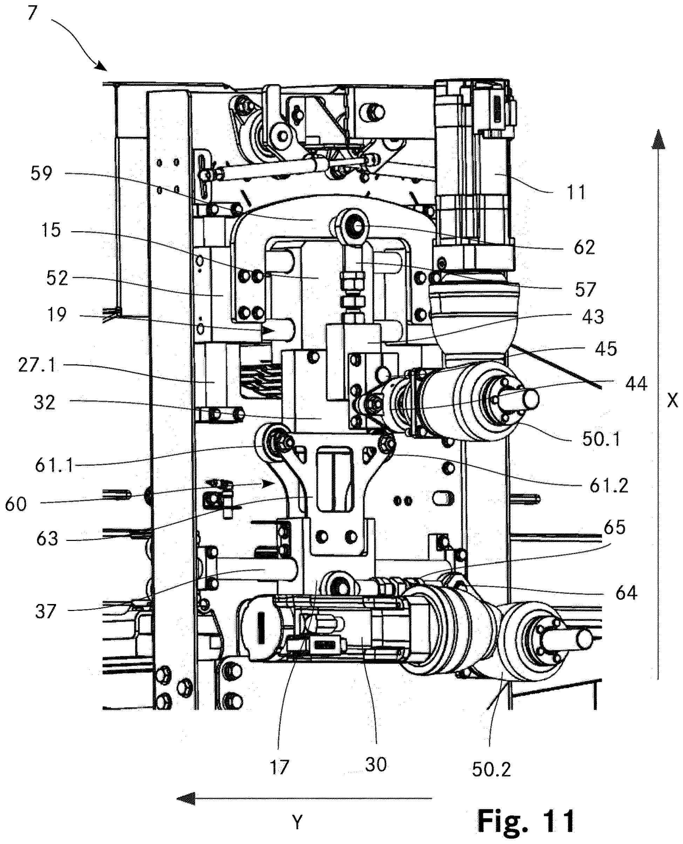

Die Figur 11 zeigt einen Ausschnitt einer perspektivischen Ansicht einer weiteren Variante einer nicht erfindungsgemässen Vorrichtung 1, welche im Vergleich zur Variante gemäss der Figuren 9 und 10 über zwei Unterschiede verfügt. Auf der Figur 11 ist die Verschiebevorrichtung 7 der zweiten Säule 8 dieser Variante ersichtlich.

Der erste Unterschied zur Variante gemäss der Figuren 9 und 10 besteht darin, dass die Bewegung der zweiten Verschiebevorrichtung 25 in der ersten Raumrichtung X über das Zusammenwirken des zweiten Exzenterelements 43, welches wiederum durch den zweiten Antrieb 11 über ein Getriebe 50.1 in Drehbewegung versetzt werden kann, mit einer Pleuelstange 57 erfolgt. Wiederum ist das zweite Exzenterelement 43 über die erste Exzenterachse 44 über das Getriebe 50.1 mit dem Abtrieb des zweiten Antriebs 11 verbunden. Die zweite Exzenterachse 45 ist jedoch drehend mit einem ersten Ende der Pleuelstange 57 verbunden. An ihrem zweiten Ende ist die Pleuelstange 57 über eine Pleuelachse 62 drehend mit einem Bogenelement 59 drehend verbunden. Das Bogenelement ist beidseitig jeweils mit der ersten Gleitbuchse 52 sowie der zweiten Gleitbuchse 53 fest verbunden. Wird nun das zweite Exzenterelement 43 in eine Drehbewegung versetzt, so dreht sich das erste Ende der Pleuelstange 57 um die erste Exzenterachse 44. Durch die drehbare Verbindung der Pleuelstange 57 an ihrem zweiten Ende über die Pleuelachse 62 wird die Drehbewegung des ersten Endes der Pleuelstange 57 durch die drehbare Verbindung mit dem Bogenelement 59 an ihrem zweiten Ende über die Pleuelachse 62 in eine reine lineare Bewegung des Bogenelements 59 in der ersten Raumrichtung X umgesetzt. Diese Bewegung wird durch das Bogenelement auf die beiden Gleitbuchsen 52, 53 und letztlich auf den zweiten Schlitten 15 übertragen. Durch die in der zweiten Raumrichtung Y linear bewegliche Lagerung des zweiten Schlittens 15 erfolgt dessen Bewegung in der ersten Raumrichtung X unabhängig von einer allfälligen Bewegung in der zweiten Raumrichtung Y.

Der zweite Unterschied der Variante gemäss der Figur 11 zu der Variante gemäss der Figuren 9 und 10 ist die Übertragung der Bewegung in der zweiten Raumrichtung Y vom vierten Schlitten 17 auf den zweiten Schlitten 15. Wie bei der Variante gemäss der Figuren 9 und 10 weist der zweite Schlitten 15 einen zweiten Balken 32 auf. Dieser greift jedoch nicht in eine Nut des vierten Schlittens 17 ein, sondern wird beidseitig an seinen Kanten jeweils von einer Rolle 61.1, 61.2 flankiert, die auf diesen Kanten laufen. Die beiden Rollen 61.1. 61.2 sind ihrerseits drehend an einem Fortsatz 64, der am vierten Schlitten 17 befestigt ist, gelagert. Durch diese Anordnung kann eine Bewegung des vierten Schlittens 17 in der zweiten Raumrichtung Y auf den zweiten Balken 32 übertragen werden, wobei der zweite Balken 32 selbst relativ zum vierten Schlitten 17 beziehungsweise dessen Fortsatz 64 in der ersten Raumrichtung X frei bewegbar ist.

Auf der Figur 11 ist ferner auch der dritte Antrieb 30 ersichtlich, der den vierten Schlitten 17 in der zweiten Raumrichtung Y bewegt. Der dritte Antrieb 30 ist als Drehantrieb ausgestaltet und mit einem Getriebe 50.2 gekoppelt. Am Abtrieb des Getriebes 50.2 ist ein drittes Exzenterelement 64 angebracht, welches drehend mit einem ersten Ende einer dritten Pleuelstange 65 verbunden ist. Die dritte Pleuelstange 65 ist an ihrem zweiten Ende drehend mit dem vierten Schlitten 17 verbunden. Durch diese Anordnung kann die Drehbewegung des dritten Antriebs 30 in eine lineare Bewegung des vierten Schlittens 17 in der zweiten Raumrichtung Y umgesetzt werden. Alternativ könnte der dritte Antrieb 30 jedoch auch ein Linearantrieb sein.

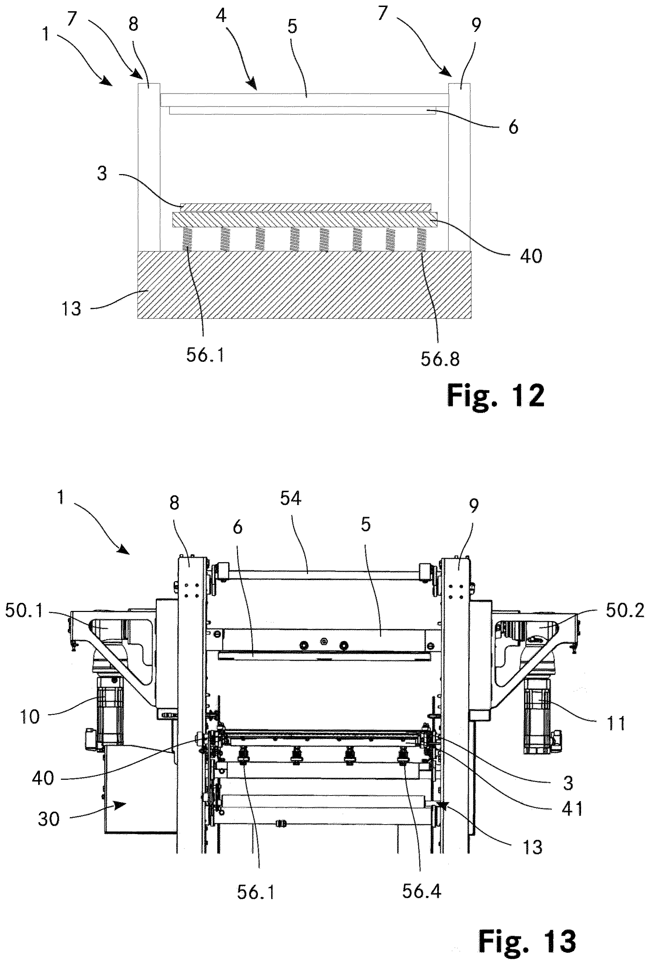

Die Figur 12 zeigt eine schematische Ansicht einer Ausführungsform einer erfindungsgemässen Vorrichtung 1 von vorne. Bei dieser Ausführungsform verfügt die Vorrichtung 1 über eine Fördervorrichtung 3, auf welcher ein Teig 2 aufgelegt werden kann, um diesen in einer Förderrichtung F zu fördern. Die Förderrichtung F liegt bei dieser Figur in der Betrachtungsachse und ist zum Betrachter hin gerichtet. Beidseits der Fördervorrichtung 3 ist eine erste Säule 8 sowie eine zweite Säule 9 angeordnet. Die Säulen 8, 9 gehören zu einer Verschiebevorrichtung 7. Die Vorrichtung 1 umfasst ferner eine Schneidvorrichtung 4 mit einem Messerbalken 5, an welchem eine Messerklinge 6 befestigt ist. Mittels der Verschiebevorrichtung 7 kann der Messerbalken 5 mit der Messerklinge 6 linear in einer ersten Raumrichtung X, die zur Förderrichtung F orthogonal liegt, zur Fördervorrichtung 3 hin bewegt werden, um ein auf der Fördervorrichtung 3 liegenden Teig 2 zu schneiden.

Bei der gezeigten dritten Ausführungsform weist die Vorrichtung 1 eine Gegendruckplatte 40 auf, auf welcher die Fördervorrichtung 3 aufliegt bzw. läuft. Die Gegendruckplatte 40 liegt im Bereich der Verschiebevorrichtung 7, das heisst im Bereich zwischen den Säulen 8, 9. Mittels der Gegendruckplatte 40 wird ein Durchbiegen der Fördervorrichtung 3 verhindert, wenn die Messerklinge einen auf der Fördervorrichtung 3 liegenden Teig schneidet. Die Gegendruckplatte 40 ist mittels mehrerer Federelemente 56.1 - 56.8 relativ zu einem Gestell 13 der Vorrichtung 1 federnd abgestützt. Es versteht sich, dass in Förderrichtung auch mehrere Federelemente 56.1 - 56.8 hintereinander angeordnet sein können, die Gegendruckplatte 40 demnach mittels mehrerer Reihen von quer zur Förderrichtung nebeneinander liegenden Federelementen 56.1 - 56.8 auf dem Gestell 13 abgestützt sein kann. Aufgrund der Darstellung der Vorrichtung 1 von vorne ist auf der Figur 12 jedoch nur eine Reihe von Federelementen 56.1 - 56.8 ersichtlich. Mittels der Federelemente 56.1 - 56.8 kann die Gegendruckplatte 40 in Richtung des Gestells 13 ausgelenkt werden, wenn die durch den Messerbalken 5 beziehungsweise dem Schneidmesser 6 auf die Fördervorrichtung 3 ausgeübte Kraft eine definierte Maximalkraft übersteigt. Diese Maximalkraft kann durch eine entsprechende Auswahl der Federelemente 56.1 - 56.8 gezielt gewählt werden, beispielsweise indem Federelemente 56.1 - 56.8 mit einer definierten Federkonstante verwendet werden. Die Federelemente 56.1 - 56.8 sind vorzugsweise als Federpakete ausgestaltet.

Die Figur 13 zeigt ein Schnittbild einer Variante der in der Figur 12 gezeigten Ausführungsform der erfindungsgemässen Vorrichtung 1. Diese Variante weist zusätzlich die Merkmale der Variante der nicht erfindungsgemässen Vorrichtung 1 gemäss Fig. 1 sowie der Variante der nicht erfindungsgemässen Vorrichtung 1 gemäss Figur 8 auf. Das heisst, dass die Verschiebevorrichtung 7 über eine Schlittenanordnung gemäss der Figur 8 und über einen ersten Antrieb 10 sowie über einen zweiten Antrieb 11 verfügt, welche durch eine Steuerung 12 separat angesteuert werden können. Ferner liegt die Fördervorrichtung 3 auf einer in der zweiten Raumrichtung Y beweglichen Gegendruckplatte 40 auf, die auf einer Gleitplatte 41 angeordnet ist. Bei dieser Variante der erfindungsgemässen Vorrichtung 1 ist die Gegendruckplatte 40 nicht direkt mittels Federelementen 56.1 - 56.4 auf dem Gestell 13 abgestützt, sondern über die Gleitplatte 41. Das heisst, die Federelemente 56.1 - 56.4 sind zwischen dem Gestell 13 und der Gleitplatte 41 angeordnet. Die Federwirkung auf die Fördervorrichtung 3 ergibt sich durch das Aufliegen derselben auf der Gleitplatte.

Für einen Fachmann ist klar, dass die Merkmale der erfindungsgemässen Vorrichtung mit Merkmalen der Varianten der nicht erfindungsgemässen Vorrichtungen miteinander kombiniert werden können, je nach dem beabsichtigten Einsatz der Vorrichtung.

## Patentansprüche

1. Vorrichtung zum Schneiden oder Stanzen von Teig (2), insbesondere eines Teigbandes, umfassend eine Fördervorrichtung (3), auf welcher ein Teig (2) aufliegen kann und mit welcher dieser in einer Förderrichtung (F) gefördert wird, sowie eine Schneidvorrichtung (4) mit einem Messerbalken (5), an welchem mindestens eine Messerklinge (6) insbesondere lösbar befestigt ist, sowie einer Verschiebevorrichtung (7), mit welcher der Messerbalken (5) orthogonal relativ zur Fördervorrichtung (7) in einer ersten Raumrichtung (X), insbesondere der vertikalen Raumrichtung, linear verschiebbar ist, um einen auf der Fördervorrichtung (F) liegenden Teig (2) an definierten Stellen zu schneiden, wobei die Verschiebevorrichtung (7) zwei seitlich und einander gegenüber stehende Säulen (8, 9) umfasst, welche sich in der ersten Raumrichtung (X) relativ zur Fördervorrichtung (F) erstrecken und von dieser abstehen, und an welchen der Messerbalken (5) linear in der ersten Raumrichtung (X) verschiebbar gelagert ist, **dadurch gekennzeichnet, dass** die Fördervorrichtung (3) im Bereich der Verschiebevorrichtung (7) auf einer Gegendruckplatte (40) aufliegt, die auf der dem Messerbalken (5) gegenüberliegenden Seite der Fördervorrichtung (3) angeordnet ist, wobei die Gegendruckplatte (40) relativ zu einem Gestell (13) der Vorrichtung (1) entgegen der Federkraft mindestens eines Federelements (56.1 - 56.8; 56.1 - 56.4) in der ersten Raumrichtung (X) vom Messerbalken (5) weg beweglich gelagert ist.

2. Vorrichtung gemäss Anspruch 1, **dadurch gekennzeichnet, dass** das mindestens eine Federelement (56.1 - 56.8; 56.1 - 56.4) ein Federpaket ist.

3. Vorrichtung gemäss einem der Ansprüche 1 oder 2, **dadurch gekennzeichnet, dass** an einer ersten Säule (8) ein erster Antrieb (10) und an der zweiten Säule (9) ein zweiter Antrieb (11) angeordnet ist, wobei der erste Antrieb (10) und der zweite Antrieb (11) unabhängig voneinander durch eine Steuerung (12) der Vorrichtung (1) angesteuert werden, um den Messerbalken (5) in der ersten Raumrichtung (X) linear entlang der jeweiligen Säule (8, 9) zu bewegen.

4. Vorrichtung gemäss Anspruch 3, **dadurch gekennzeichnet, dass** die Säulen (8, 9) über jeweils einen Schlitten (14, 15) verfügen, welche in der ersten Raumrichtung (X) linear verschiebbar entlang dieser gelagert sind, wobei der Messerbalken (5) an einem ersten Ende mit einem ersten Schlitten (14) der ersten Säule (8) über eine orthogonal zur ersten Raumrichtung, insbesondere vertikal liegende erste Achse (21) drehend verbunden ist, und an einem zweiten Ende mit einem zweiten Schlitten (15) der zweiten Säule (9) über ein Ausgleichselement (20) verbunden ist, wobei das Ausgleichselement (20) über eine zweite Achse (22) mit dem zweiten Schlitten (15) und mit einer dritten Achse (23) mit dem Messerbalken (5) drehend verbunden ist, wobei die zweite Achse (22) und die dritte Achse (23) parallel zur ersten Achse (21) stehen und voneinander beabstandet am Ausgleichselement (20) angeordnet sind, und wobei der erste Antrieb (10) und der zweite Antrieb (11) jeweils mit dem ersten Schlitten (14) beziehungsweise mit dem zweiten Schlitten (15) wirkverbunden sind, um den ersten Schlitten (14) und den zweiten Schlitten (15) in der ersten Raumrichtung (X) linear entlang der ersten Säule (8) beziehungsweise der zweiten Säule (9) zu bewegen.

5. Vorrichtung gemäss einem der Ansprüche 3 oder 4, **dadurch gekennzeichnet, dass** die Steuerung (12) derart ausgestaltet ist, dass der erste Antrieb (10) und der zweite Antrieb (11) um eine vordefinierte Zeit relativ zueinander angesteuert werden, um den ersten Schlitten (14) beziehungsweise den zweiten Schlitten (15) in der ersten Raumrichtung (X) zur Fördervorrichtung (3) hin zu bewegen, so dass der Messerbalken (5) einen Winkel relativ zu einer Ebene der Fördervorrichtung (3) einnimmt, wenn dieser zur Fördervorrichtung (3) hin bewegt wird, um einen Wippschnitt eines auf der Fördervorrichtung (3) liegenden Teiges (2) zu ermöglichen.

6. Vorrichtung gemäss einem der Ansprüche 4 oder 5, **dadurch gekennzeichnet, dass** einer der zwei Schlitten zusätzlich in einer zweiten Raumrichtung, die parallel zur Förderrichtung ist, linear verschiebbar auf der jeweiligen Säule gelagert, wobei der mindestens eine Schlitten durch einen Linearantrieb entlang der zweiten Raumrichtung in die Förderrichtung und entgegen der Förderrichtung verschoben werden kann.

7. Vorrichtung gemäss einem der Ansprüche 1 bis 5, **dadurch gekennzeichnet, dass** die erste Säule (8) sowie die zweite Säule (9) über eine erste Verschiebeeinheit (24) beziehungsweise über eine zweite Verschiebeeinheit (25) verfügen, welche in der ersten Raumrichtung (X) linear verschiebbar relativ zur jeweiligen Säule (8, 9) an dieser bewegbar gelagert sind und mittels des mindestens einen ersten Antriebs (10) bewegt werden, wobei an der ersten Verschiebeeinheit (24) ein erster Schlitten (14) und an der zweiten Verschiebeeinheit (25) ein zweiter Schlitten (15) relativ zur jeweiligen Verschiebeeinheit (24, 25) in einer zweiten Raumrichtung (Y), die parallel zur Förderrichtung (F) der Fördervorrichtung (3) steht, linear verschiebbar gelagert sind, und an denen der Messerbalken (5) jeweils an einem seiner Enden verbunden ist, wobei die Vorrichtung (1) über einen dritten Antrieb (30) verfügt, mit welchem sich der erste Schlitten (14) sowie der zweite Schlitten (15) in der zweiten Raumrichtung (Y) in Förderrichtung (F) vor und entgegen der Förderrichtung (F) auf der jeweiligen Verschiebeeinheit (24, 25) zurück bewegen lassen.

8. Vorrichtung gemäss Anspruch 7, **dadurch gekennzeichnet, dass** die Vorrichtung (1) eine Steuerung (12) umfasst, welche derart konfiguriert ist, dass der erste Schlitten (14) sowie der zweite Schlitten (15) durch den dritten Antrieb (30) mit einer ersten Geschwindigkeit, die der Geschwindigkeit der Fördervorrichtung (3) entspricht oder um einen ersten vordefinierten Betrag höher als diese ist in die Förderrichtung (F) vor und mit einer zweiten vordefinierten Geschwindigkeit, die insbesondere um einen zweiten Betrag höher ist als die Fördergeschwindigkeit entgegen der Förderrichtung (F) zurück beweg werden.

9. Vorrichtung gemäss Anspruch 8, **dadurch gekennzeichnet, dass** die Steuerung (12) derart konfiguriert ist, dass während der Bewegung des ersten Schlittens (14) sowie des zweiten Schlittens (15) in die Förderrichtung (F) der mindestens eine erste Antrieb (10) derart angesteuert wird, dass der Messerbalken (5) durch die erste Verschiebeeinheit (24) und die zweite Verschiebeeinheit (25) aus einer Grundposition heraus zur Fördervorrichtung (3) hin, und insbesondere die mindestens eine am Messerbalken (5) befestigte Messerklinge (6) auf die Fördervorrichtung (3) bewegt wird, und bei der Bewegung des ersten Schlittens (14) sowie des zweiten Schlittens (15) entgegen der Förderrichtung (F) der Messerbalken (5) wieder zurück in die Grundposition bewegt wird.

10. Vorrichtung gemäss einem der Ansprüche 7 bis 9, **dadurch gekennzeichnet, dass** der erste Schlitten (14) und der zweite Schlitten (15) jeweils über einen Balken (31, 32) verfügen, welche in der ersten Raumrichtung (X) von diesen abstehen und in der ersten Raumrichtung (X) linear beweglich mit einem dritten Schlitten (16) beziehungsweise mit einem vierten Schlitten (17) verbunden sind, wobei der Dritte Antrieb (30) mit dem dritten Schlitten (16) und dem vierten Schlitten (17) in Wirkverbindung steht, um diese in der zweiten Raumrichtung (Y) vor und zurück zu bewegen.

11. Vorrichtung gemäss Anspruch 10, **dadurch gekennzeichnet, dass** die Balken (31, 32) in eine Gleitführung des dritten Schlittens (16) beziehungsweise vierten Schlittens (17) eingreifen oder über eine Wälzführung (60) mit dem dritten Schlitten (16) beziehungsweise dem vierten Schlitten (17) verbunden ist.

12. Vorrichtung gemäss einem der Ansprüche 10 oder 11, **dadurch gekennzeichnet, dass** der dritte Antrieb (30) die Gegendruckplatte (40), auf welcher die Fördervorrichtung (3) im Bereich der Verschiebevorrichtung (7) aufliegt, in der Förderrichtung (F) vor und entgegen der Förderrichtung (F) der Fördervorrichtung (3) zurück bewegt, wobei der dritte Schlitten (16) und der vierte Schlitten (17) mit der Gegendruckplatte (40) gekoppelt sind.

13. Vorrichtung gemäss einem der Ansprüche 7 bis 12, **dadurch gekennzeichnet, dass** die erste Verschiebeeinheit (24) sowie die zweite Verschiebeeinheit (25) über einen fünften Schlitten (18) beziehungsweise über einen sechsten Schlitten (19) verfügen, die relativ zur jeweiligen Verschiebeeinheit (24, 25) in der zweiten Raumrichtung (Y) linear verschiebbar gelagert sind, wobei der mindestens eine erste Antrieb (10) als Drehantrieb ausgestaltet ist, welcher über mindestens ein Exzenterelement (42, 43) mit dem fünften Schlitten (18) und/oder mit dem sechsten Schlitten (19) verbunden ist, so dass eine Rotationsbewegung eines Abtriebs (51) des mindestens einen ersten Antriebs (10) über das mindestens eine Exzenterelement (42, 43) in eine lineare Bewegung des fünften Schlittens (18) und/oder des sechstens Schlittens (19) in die erste Raumrichtung (X) übersetzt wird.

14. Vorrichtung gemäss einem der Ansprüche 7 bis 12, **dadurch gekennzeichnet, dass** die erste Verschiebeeinheit (24) und/oder die zweite Verschiebeeinheit (25) über eine Pleuelstange (57) mit einem Exzenterelement (42, 43) verbunden ist, welches durch den ersten Antrieb (10) und/oder durch den zweiten Antrieb (11), der als Drehantrieb ausgestaltet ist, in eine Drehbewegung versetzt werden kann.
